# EUROPÄISCHE PATENTSCHRIFT

(11) **EP 1 940 654 B1**
(45) Veröffentlichungstag und Bekanntmachung des Hinweises auf die Patenterteilung: **11.12.2013**
(21) Anmeldenummer: 06793959.5
(22) Anmeldetag: 04.10.2006
(51) Int. Cl.: B60R 16/02, H04L 12/40

(54) **Verfahren zur Anbindung eines FlexRay-Teilnehmers mit einem Mikrocontroller an eine FlexRay-Kommunikationsverbindung über eine FlexRay-Kommunikationssteuereinrichtung, und FlexRay-Kommunikationssystem zur Realisierung dieses Verfahrens**
Method for connecting a FlexRay user comprising a microcontroller to a FlexRay communication connection via a FlexRay communication control device, and FlexRay-communication system for producing said method
Procédé pour relier un noeud de réseau FlexRay, muni d'un microcontroleur, à une connexion de communication, par l'intermédiaire d'un dispositif de commande de liaison de communication FlexRay et système de communication FlexRay pour mettre ledit

(30) Priorität: 06.10.2005 DE 102005048595
(43) Veröffentlichungstag der Anmeldung: 09.07.2008
(73) Patentinhaber: ROBERT BOSCH GMBH, 70442 Stuttgart (DE)
(72) Erfinder: NEWALD, Josef, 70469 Stuttgart (DE); WEBER, Corina, 70184 Stuttgart (DE)
(86) Internationale Anmeldenummer: PCT/EP2006/067042
(87) Internationale Veröffentlichungsnummer: WO 2007/039627

(56) Entgegenhaltungen:
- US-A1- 2004 128 673
- US-A1- 2005 004 727
- US-A1- 2005 132 105
- US-A1- 2005 198 280
- A. FARRENKOPF, R. STARBACK: "Flexray Expansion Board for Universal Prototype ECU Platform" INTERNET ARTICLE, [Online] 2004, Seiten 1-2, XP002411980 Internet Gefunden im Internet: URL:http://www.hanser-automotive.de/filead min/heftarchiv/2004/flex30-31.pdf> [gefunden am 2006-12-18]
- OBERMAISSER R: "CAN emulation in a time-triggered environment" 8. Juli 2002 (2002-07-08), INDUSTRIAL ELECTRONICS, 2002. ISIE 2002. PROCEEDINGS OF THE 2002 IEEE INTERNATIONAL SYMPOSIUM ON JULY 8-11, 2002, PISCATAWAY, NJ, USA,IEEE, PAGE(S) 270-275 , XP010598182 ISBN: 0-7803-7369-3 das ganze Dokument

## Beschreibung

Die vorliegende Erfindung betrifft ein Verfahren zur Anbindung eines FlexRay-Teilnehmers mit einem Mikrocontroller, der mindestens eine serielle (z.B. Universal Synchron/Asynchron Receiver/Transmitter; USART) Schnittstelle aufweist, an eine FlexRay-Kommunikationsverbindung über eine FlexRay-Kommunikationssteuereinrichtung (so genannter FlexRay Communication Controller (CC) oder FlexRay Kommunikationscontroller). Die FlexRay-Kommunikationssteuereinrichtung weist mindestens eine serielle (z.B. USART) Schnittstelle auf. Die Verbindung zwischen dem Teilnehmer und der Kommunikationssteuereinrichtung erfolgt über serielle (z. B. USART) Schnittstellen.

Schließlich betrifft die Erfindung auch ein FlexRay-Kommunikationssystem umfassend eine FlexRay-Kommunikationsverbindung mit daran über FlexRay-Kommunikationssteuereinrichtungen (so genannte FlexRay Communication Controller (CC) oder FlexRay-Kommunikationscontroller) angeschlossenen FlexRay-Teilnehmern. Mindestens einer der Teilnehmer weist einen Mikrocontroller auf, der mindestens eine serielle (z. B. USART) Schnittstelle aufweist. Die Verbindung zwischen dem mindestens einen Teilnehmer und der Kommunikationssteuereinrichtung erfolgt über serielle (z. B. USART) Schnittstellen.

### Stand der Technik

Die Vernetzung von Steuergeräten, Sensorik und Aktuatorik mit Hilfe eines Kommunikationssystems und einer als Bussystem ausgebildeten Kommunikationsverbindung hat in den letzten Jahren bei modernen Kraftfahrzeugen aber auch im Maschinenbau, insbesondere im Werkzeugmaschinenbereich, und im Bereich der Automatisierung, drastisch zugenommen. Synergieeffekte durch Verteilung von Funktionen auf mehrere Steuergeräte können dabei erzielt werden. Man spricht hierbei von verteilten Systemen. Die Kommunikation zwischen verschiedenen Teilnehmern findet mehr und mehr über ein als Bussystem ausgebildetes Kommunikationssystem statt. Der Kommunikationsverkehr auf dem Bussystem, Zugriffs- und Empfangsmechanismen sowie Fehlerbehandlung werden über ein Protokoll geregelt.

Ein bekanntes Protokoll hierzu ist das FlexRay-Protokoll, wobei im Augenblick die FlexRay-Protokollspezifikation v2.0 oder v2.1 zugrunde liegt. Das FlexRay-Protokoll definiert ein schnelles, deterministisches und fehlertolerantes Bussystem, insbesondere für den Einsatz in einem Kraftfahrzeug. Die Datenübertragung gemäß dem FlexRay-Protokoll erfolgt nach einem Time Division Multiple Access (TDMA)-Verfahren. Die Datenübertragung über die Kommunikationsverbindung erfolgt in sich regelmäßig wiederholenden Übertragungszyklen, die jeweils in mehrere Datenrahmen, die auch als Zeitschlitze bezeichnet werden, unterteilt ist. Den Teilnehmern bzw. den zu übertragenden Botschaften sind feste Zeitschlitze zugewiesen, in denen sie einen exklusiven Zugriff auf die Kommunikationsverbindung haben. Die Zeitschlitze wiederholen sich in den festgelegten Übertragungszyklen, so dass der Zeitpunkt, zu dem eine Botschaft über den Bus übertragen wird, exakt vorausgesagt werden kann und der Buszugriff deterministisch erfolgt.

Um die Bandbreite für die Botschaftsübertragung auf dem Bussystem optimal zu nutzen, unterteilt FlexRay den Übertragungszyklus, der auch als Zyklus oder Buszyklus bezeichnet werden kann, in einen statischen und einen dynamischen Teil. Die festen Zeitschlitze befinden sich dabei im statischen Teil am Anfang eines Buszyklusses. Im dynamischen Teil werden die Zeitschlitze dynamisch vergeben. Darin wird nun der exklusive Buszugriff jeweils nur für eine kurze Zeit, für einen oder mehrere so genannte Minislots, ermöglicht. Nur wenn innerhalb eines Minislots ein Buszugriff erfolgt, wird der Zeitschlitz um die benötigte Zeit verlängert. Damit wird Bandbreite also nur verbraucht, wenn sie auch tatsächlich benötigt wird.

FlexRay kommuniziert über zwei physikalisch getrennte Leitungen der Kommunikationsverbindung mit einer Datenrate von je maximal 10 MBit/s (10 MBaud). Dabei ist alle 5 ms, bei manchen Kommunikationssystemen sogar alle 1 ms oder 2,5 ms ein Buszyklus abgeschlossen. Die beiden Kanäle entsprechen dabei der physikalischen Schicht, insbesondere des OSI (Open System Architecture) Schichtenmodells. Die beiden Kanäle dienen hauptsächlich der redundanten und damit fehlertoleranten Übertragung von Botschaften, können jedoch auch unterschiedliche Botschaften übertragen, wodurch sich dann die Datenrate verdoppeln würde. FlexRay kann aber auch mit niedrigeren Datenraten betrieben werden.

Um synchrone Funktionen zu realisieren und die Bandbreite durch kleine Abstände zwischen zwei Botschaften zu optimieren benötigen die Teilnehmer bzw. die verteilten Komponenten im Kommunikationsnetzwerk eine gemeinsame Zeitbasis, die so genannte globale Zeit. Für die Uhrsynchronisation werden Synchronisationsnachrichten im statischen Teil des Zyklus übertragen, wobei mit Hilfe eines speziellen Algorithmus entsprechend der FlexRay-Spezifikation die lokale Uhrzeit eines Teilnehmers so korrigiert wird, dass alle lokalen Uhren zu einer globalen Uhr synchron laufen.

Ein FlexRay- Teilnehmer, der auch als FlexRay- Netzknoten oder Host bezeichnet werden kann, enthält einen Teilnehmer- oder Host-Prozessor, einen FlexRay-oder Kommunikations-Controller sowie bei einer Busüberwachung einen so genannten Busguardian. Der Kommunikations-Controller wird auch als Communication Controller (CC) oder Kommunikationssteuereinrichtung bezeichnet. Der Teilnehmer ist über den Kommunikationscontroller an der Kommunikationsverbindung angeschlossen. Der Teilnehmerprozessor liefert und verarbeitet die Daten, die über den FlexRay-Kommunikationscontroller und die FlexRay-Kommunikationsverbindung übertragen werden. Für die Kommunikation in einem FlexRay-Netzwerk können Botschaften bzw. Botschaftsobjekte mit z.B. bis zu 254 Datenbytes konfiguriert werden.

Zur Kopplung einer FlexRay-Kommunikationsverbindung, über die Botschaften übertragen werden, mit einem FlexRay-Teilnehmer wird in der DE 10 2005 034 744, die zum Anmeldetag der vorliegenden Erfindung noch nicht veröffentlich war, ein FlexRay-Kommunikationsbaustein eingesetzt, der über eine Teilnehmerschnittstelle (sog. Customer CPU Interface (CIF)) an dem Teilnehmer und über eine andere Verbindung (sog. Generic CPU Interface (GIF)) an der Kommunikationsverbindung angeschlossen ist. Der Kommunikationsbaustein kann Teil des Kommunikationscontrollers oder als ein separates Bauteil ausgebildet sein. Dabei ist zur Übertragung der Botschaften zwischen dem Teilnehmer und der Kommunikationsverbindung in dem Kommunikationsbaustein eine Anordnung zur Speicherung der Botschaften vorgesehen. Die Übertragung wird durch eine Zustandsmaschine gesteuert. Die Speicheranordnung umfasst einen Botschaftsspeicher, der vorzugsweise als single-ported RAM (Random Access Memory) ausgeführt ist. Dieser RAM-Speicher speichert die Botschaften bzw. Botschaftsobjekte, also die eigentlichen Nutzdaten, zusammen mit Konfigurations- und Statusdaten. Die genaue Struktur des Botschaftsspeichers des bekannten Kommunikationsbausteins kann der genannten Druckschrift DE 10 2005 034 744 entnommen werden. Bezüglich Aufbau und Funktion des Kommunikationsbausteins wird auf diese Druckschrift ausdrücklich verwiesen.

In dem Kommunikationsbaustein ist ein Schnittstellenbaustein bestehend aus zwei Teilen vorgesehen, wobei der eine Teilbaustein teilnehmerunabhängig und der andere Teilbaustein teilnehmerspezifisch bzw. kundenspezifisch ist. Der kundenspezifische Teilbaustein, der auch als Customer CPU Interface (CIF) bezeichnet wird, verbindet einen kundenspezifischen Teilnehmer in Form einer teilnehmerspezifischen Host-CPU mit dem FlexRay-Kommunikationsbaustein. Der teilnehmerunabhängige Teilbaustein, der auch als Generic CPU Interface (GIF) bezeichnet wird, stellt ein generisches, also allgemeines, CPU-Interface dar, über das sich mittels entsprechender kundenspezifischer Teilbausteine, also Customer CPU Interfaces (CIFs), unterschiedliche kundenspezifische Host-CPUs an den FlexRay-Kommunikationsbaustein anschließen lassen. Dadurch ist eine problemlose Anpassung des Kommunikationsbausteins an unterschiedliche Teilnehmer möglich, da abhängig vom Teilnehmer bzw. Kunden nur der kundenspezifische Teilbaustein variiert werden muss, während der teilnehmerunabhängige Teilbaustein und der restliche Kommunikationsbaustein stets gleich ausgebildet werden kann. Mit Hilfe des Kommunikationsbausteins ergibt sich also eine Standard-Schnittstelle zum Anschluss beliebiger FlexRay-Teilnehmer an eine FlexRay-Kommunikationsverbindung, wobei sich die Schnittstelle durch einfache Variation des kundenspezifischen Teilbausteins an beliebig ausgebildete oder geartete Teilnehmer flexibel anpassen lässt. Dabei können die Teilbausteine auch innerhalb des einen Schnittstellenbausteins jeweils in Software, also jeder Teilbaustein als Softwarefunktion, oder in Hardware realisiert werden.

Die Zustandsmaschine in dem FlexRay-Kommunikationsbaustein kann fest in Hardware verdrahtet sein. Die Sequenzen können ebenfalls fest in Hardware verdrahtet sein. Alternativ kann die Zustandsmaschine im Kommunikationsbaustein über die Teilnehmerschnittstelle durch den Teilnehmer auch frei programmierbar sein.

Die Informationen enthalten vorzugsweise den Zugriffstyp und/oder die Zugriffsärt und/oder die Zugriffsadresse und/oder die Datengröße und/oder Steuerinformationen zu den Daten und/oder wenigstens eine Information zur Datenabsicherung.

Nach dem Stand der Technik verfügt der Mikrocontroller eines FlexRay-Teilnehmers über eine oder mehrere, typischerweise über zwei, serielle Schnittstellen, die bspw. als Universal Synchron/ Asynchron Receiver/ Transmitter (USART) Schnittstellen ausgebildet sein können. Über diese Schnittstellen ist der Mikrocontroller zur Realisierung bestimmter Funktionalitäten mit einem oder mehreren anderen Mikrocontrollern, bspw. von einem anderen Teilnehmer, verbunden. So ist es beispielsweise denkbar, dass der Mikrocontroller des FlexRay-Teilnehmers über eine erste serielle Schnittstelle zur Realisierung der Funktionalität einer Wegfahrsperre mit einer ersten seriellen Schnittstelle eines anderen Mikrocontrollers verbunden ist und dass der Mikrocontroller des FlexRay-Teilnehmers über eine zweite serielle Schnittstelle zur Realisierung der Funktionalität eines LIN (Local Interconnect Network)-Busses mit einer zweiten seriellen Schnittstelle eines anderen oder des anderen Mikrocontrollers verbunden ist. Wenn nun aber eine Anbindung des FlexRay-Teilnehmers an die FlexRay-Kommunikationsverbindung über die FlexRay-Kommunikationssteuereinrichtung erfolgen soll, wird dazu eine serielle (z.B. USART) Schnittstelle des Mikrocontrollers des Teilnehmers verbraucht und steht nicht mehr für die anderen Funktionalitäten zur Verfügung. Das führt zu einer erheblichen Einschränkung der Funktionalität des Mikrocontrollers des Teilnehmers.

Aus der US-2005/0132105 ist ein Netzwerkknoten mit zwei seriellen Netzwerkschnittstellen bekannt, welche z.B. in einem FlexRay-Kommunikationssystem eingesetzt werden können. In der US-2005/0004727 wird ein Fahrzeug-Kommunikationsnetzwerk, z.B. für einen Einsatz gemäß dem FlexRay-Protokoll, beschrieben, wobei in den Kommunikationsnetzwerk Bauteile mit mehreren Schnittstellen vorgesehen sein können.

Der vorliegenden Erfindung liegt deshalb die Aufgabe zugrunde, ein FlexRay-Kommunikationssytsem, insbesondere den Mikrocontroller eines FlexRay-Teilnehmers und/oder einen dem Teilnehmer zugeordneten FlexRay-Kommunikationscontroller, derart auszugestalten und weiterzubilden, dass der Teilnehmer ohne Einschränkung seiner Funktionalität über eine serielle Schnittstelle an den Kommunikationscontroller angeschlossen werden kann. Zur Lösung dieser Aufgabe werden das Verfahren nach Anspruch 1 und das System nach Anspruch 9 vorgeschlagen.

### Vorteile der Erfindung

Es wird der FlexRay Kommunikationscontroller durch eine zusätzliche softwaremäßig ausgebildete serielle Schnittstelle erweitert. Die der vorliegenden Erfindung zugrunde liegende Idee ist die, an dem FlexRay-Kommunikationscontroller mindestens eine zusätzliche serielle Schnittstelle vorzusehen, so dass der Teilnehmer und der Kommunikationscontroller über serielle Schnittstellen miteinander verbunden werden können, und gleichzeitig noch genug serielle Schnittstellen zur Verfügung stehen, um zusätzlich zu der FlexRay-Funktionalität eine oder mehrere weitere Funktionalitäten (beispielsweise Wegfahrsperre und LIN-Bus) realisieren zu können. Gemäß einer vorteilhaften Weiterbildung der vorliegenden Erfindung wird vorgeschlagen, dass die mindestens eine serielle Schnittstelle auf den von der Kommunikationssteuereinrichtung sowieso bereitgestellten Port Expansion Pins emuliert wird. Bei den Port Expansion Pins handelt es sich um eine Erweiterung oder einen so genannten Port zum Anschluss eines externen Bauteils. Die Port Expansion Pins ermöglichen lediglich eine relativ langsame Datenübertragungsrate, wobei die erzielbaren Bitraten für bestimmte Funktionalitäten ausreichend sein können. Gemäß dieser Weiterbildung muss die FlexRay Kommunikationssteuereinrichtung also nicht hardwaremäßig erweitert werden. Es wird die bestehende Hardware genutzt, um darauf eine serielle Schnittstelle zu emulieren. Um eine serielle Datenübertragung über die auf den Port Expansion Pins emulierte Schnittstelle zu ermöglichen, wird gemäß einer bevorzugten Ausführungsform der Erfindung vorgeschlagen, dass den von der Kommunikationssteuereinrichtung sowieso bereitgestellten Port Expansion Pins mindestens ein Schieberegister zugeordnet wird, in dem die zu übertragenden Daten für eine serielle Datenübertragung zwischengespeichert werden. Somit können die bei vielen FlexRay-Kommunikationssteuereinrichtungen sowieso vorhandenen Port Expansion Pins durch ein einfaches und kostengünstiges Schieberegister zu einer vollwertigen seriellen Schnittstelle erweitert werden. Mittels der Schieberegister kann die über die emulierte Schnittstelle erzielbare Datenrate deutlich erhöht werden. Im Detail wird vorgeschlagen, zum Senden einen Frequenzteiler (Baud-Rate) und ein (zum Beispiel 12-Bit) Schieberegister vorzusehen. Zum Empfangen wird ein Frequenzteiler, ein 8 x 12-Bit Schieberegister und optional einen Majority Decoder (zur Datenreduktion mittels Auswahl n aus m) vorgesehen.

Es wird vorgeschlagen, dass bei mindestens einer in der FlexRay-Kommunikationssteuereinrichtung ausgebildeten seriellen Schnittstellen eine erste Verbindung zwischen einer der seriellen Schnittstellen des Teilnehmers und einer ersten Funktionalität direkt ausgebildet wird und dass eine zweite Verbindung zwischen einer anderen der seriellen Schnittstellen des Teilnehmers und einer zweiten Funktionalität durch die FlexRay-Kommunikationssteuereinrichtung geschleift wird. Vorteilhafterweise wird die FlexRayFunktionalität über einen Teil der zweiten Verbindung zwischen dem Teilnehmer und der Kommunikationssteuereinrichtung zusammen mit der zweiten Funktionalität übertragen. Bei dieser Ausführungsform handelt es sich um eine reine Hardware-Lösung, bei der eine echte Hardware- Schnittstelle in dem FlexRay-Kommunikationscontroller zusätzlich zu der bereits vorhandenen seriellen Schnittstelle ausgebildet wird. Als eine weitere Lösung der Aufgabe der vorliegenden Erfindung wird ausgehend von der FlexRay-Kommunikationssteuereinrichtung der eingangs genannten Art vorgeschlagen, dass in der Kommunikationssteuereinrichtung mindestens eine zusätzliche serielle Hardware-Schnittstelle ausgebildet ist. Gemäß einer vorteilhaften Weiterbildung der Erfindung wird vorgeschlagen, dass die FlexRay-Kommunikationssteuereinrichtung einen FlexRay-Kommunikationsbaustein zur Kopplung der FlexRay-Kommunikationsverbindung mit dem FlexRay-Teilnehmer aufweist, wobei der Kommunikationsbaustein eine Anordnung zur Zwischenspeicherung von Botschaften und eine Zustandsmaschine aufweist, welche die Übertragung von Botschaften zwischen Kommunikationsverbindung und Teilnehmer derart steuert, dass die Zustandsmaschine vorgebbare Sequenzen betreffend Informationen zur Speicherung und Übertragung der Botschaften vorgibt oder abruft.

### Zeichnungen

Weitere Merkmale, Vorteile und bevorzugte Ausführungsformen der Erfindung werden nachfolgend anhand der Figuren näher erläutert. Es zeigen:
- Figur 1: einen Kommunikationsbaustein und dessen Anbindung an eine Kommunikationsverbindung und einen Kommunikations- oder Host-Teilnehmer eines FlexRay-Kommunikationssystems in schematischer Darstellung;
- Figur 2: eine spezielle Ausführungsform des Kommunikationsbausteins aus Figur 1 sowie dessen Anbindung im Detail;
- Figur 3: die Struktur eines Botschaftsspeichers des Kommunikationsbausteins aus Figur 2;
- Figur 4 bis 6: die Architektur und den Prozess eines Datenzugriffs in Richtung vom Teilnehmer zum Botschaftsspeicher in schematischer Darstellung;
- Figur 7 bis 9: die Architektur und den Prozess eines Datenzugriffs in Richtung vom Botschaftsspeicher zum Teilnehmer;
- Figur 10: die Struktur eines Botschaftsverwalters und von darin enthaltenen Finite-State-Machinen in schematischer Darstellung;
- Figur 11: Bauteile des Kommunikationsbausteins aus Figur 1 und 2 sowie den Teilnehmer und die entsprechenden, durch den Botschaftsverwalter gesteuerten Datenpfade in schematischer Darstellung;
- Figur 12: die Zugriffsverteilung auf den Botschaftsspeicher bezogen auf die Datenpfade in Figur 11;
- Figur 13 14: verschiedene Möglichkeiten zur Realisierung einer Verbindung und zwischen einem Mikrocontroller eines FlexRay-Teilnehmers und einem FlexRay-Kommunikationssteuereinrichtung
- Figur 15: eine aus dem Stand der Technik bekannte Konfiguration für eine Verbindung zwischen zwei Mikrocontrollern;
- Figur 16: eine erfindungsgemäße Konfiguration für eine Verbindung zwischen zwei Mikrocontrollern und einer Kommunikationssteuereinrichtung gemäß einer ersten Ausführungsform;
- Figur 17: eine erfindungsgemäße Konfiguration für eine Verbindung zwischen zwei Mikrocontrollern und einer Kommunikationssteuereinrichtung gemäß einer zweiten Ausführungsform; und
- Figur 18: eine erfindungsgemäße Konfiguration für eine Verbindung zwischen zwei Mikrocontrollern und einer Kommunikationssteuereinrichtung gemäß einer dritten Ausführungsform.

### Beschreibung der Ausführungsbeispiele

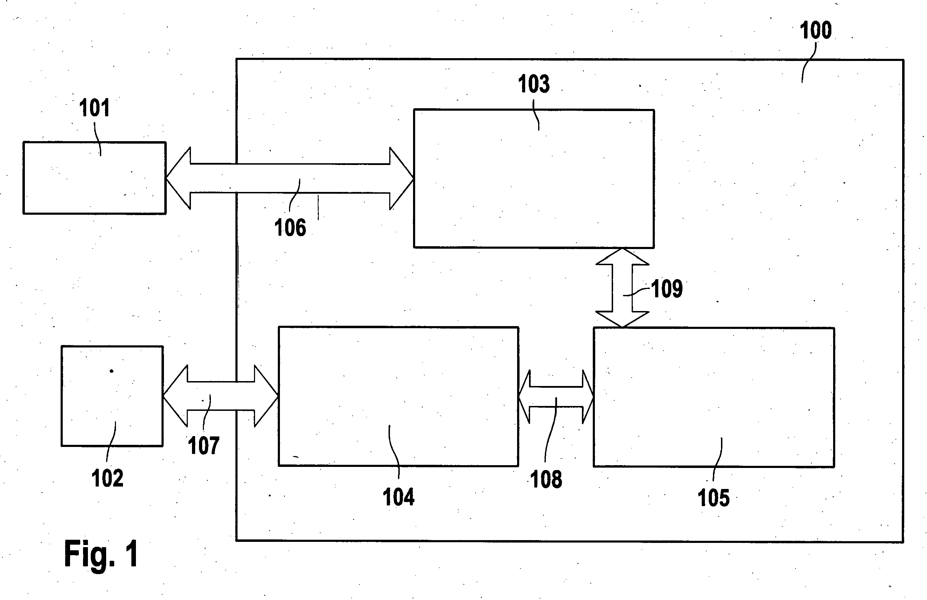

Figur 1 zeigt schematisch einen FlexRay-Kommunikationsbaustein 100 zur Anbindung eines Teilnehmers oder Hosts 102 an eine FlexRayKommunikationsverbindung 101, also die physikalische Schicht des FlexRay, Dazu ist der FlexRay-Kommunikationsbaustein 100 über eine Verbindung 107 mit dem Teilnehmer bzw. Teilnehmerprozessor 102 und über eine Verbindung 106 mit der Kommunikationsverbindung 101 verbunden. Zur problemlosen Anbindung zum einen bezogen auf Übertragungszeiten und zum anderen bezogen auf die Datenintegrität sind schematisch im Wesentlichen drei Anordnungen im FlexRay-Kommunikationsbaustein unterschieden. Dabei dient eine erste Anordnung 105 zur Speicherung, insbesondere Zwischenablage, wenigstens eines Teils der zu übertragenden Botschaften. Zwischen dem Teilnehmer 102 und dieser ersten Anordnung 105 ist über die Verbindungen 107 und 108 eine zweite Anordnung 104 geschaltet. Ebenso ist zwischen Kommunikationsverbindung 101 und die erste Anordnung 105 eine dritte Anordnung 103 über die Verbindungen 106 und 109 geschaltet, wodurch ein sehr flexibles Eingeben und Ausgeben von Daten als Teil von Botschaften, insbesondere FlexRay-Botschaften in bzw. aus der ersten Anordnung 105 mit Gewährleistung der Datenintegrität bei optimaler Geschwindigkeit erzielbar ist.

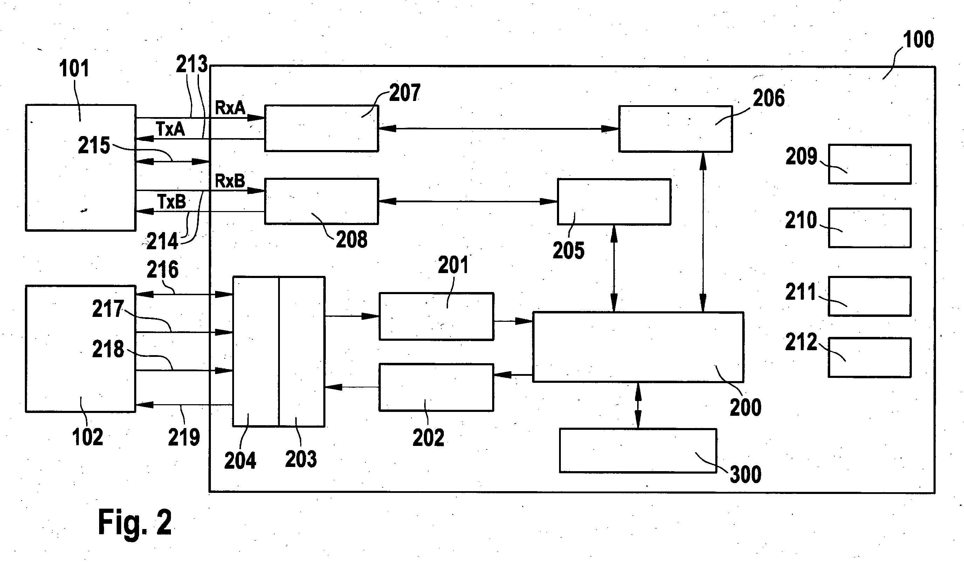

In Figur 2 istdieser Kommunikationsbaustein 100 in einer bevorzugten Ausführungsform noch einmal detaillierter dargestellt. Ebenso detaillierter dargestellt sind die jeweiligen Verbindungen 106 bis 109. Zur Anbindung des FlexRay-Kommunikationsbausteins 100 an den FlexRay-Teilnehmer 102 bzw. den Host-Prozessor enthält die zweite Anordnung 104 einen Eingangspufferspeicher oder Eingabepufferspeicher 201 (Input Buffer IBF), einen Ausgangspufferspeicher oder Ausgabepufferspeicher 202 (Output Buffer OBF) sowie einen Schnittstellenbaustein bestehend aus zwei Teilen 203 und 204, wobei der eine Teilbaustein 203 teilnehmerunabhängig und der zweite Teilbaustein 204 teilnehmerspezifisch ist. Der teilnehmerspezifische Teilbaustein 204 (Customer CPU Interface CIF) verbindet eine teilnehmerspezifische Host-CPU 102, also einen kundenspezifischen Teilnehmer mit dem FlexRay-Kommunikationsbaustein. Dazu ist üblicherweise eine bidirektionale Datenleitung 216, eine Adressleitung 217 sowie ein Steuereingang 218 vorgesehen. Ebenso vorgesehen ist mit 219 ein Interrupt- oder Unterbrechungs-Ausgang.

Denkbar sind auch folgende Alternativen für die Signale der seriellen Datenverbindung zwischen dem Teilnehmer 102 und dem kundenspezifischen Interface 204:
Alternative 1: bidirektionale Datenleitung 216, Taktleitung 217, Interruptleitung 219;
Alternative 2: bidirektionale Datenleitung 216, Taktleitung 217, Steuereingang 218, Interruptleitung 219;
Alternative 3: serielle Eingangsleitung 216, Taktleitung 217, serielle Ausgangsleitung 218, Interruptleitung 219;
Alternative 4: serielle Eingangsleitung 216, Taktleitung 217, serielle Ausgangsleitung 218, Interruptleitung 219, sowie zusätzlich eine Steuerleitung (nicht dargestellt).

Der teilnehmerspezifische Teilbaustein 204 steht in Verbindung mit einem teilnehmerunabhängigen Teilbaustein 203 (Generic CPU Interface, GIF), d. h. der FlexRay-Kommunikationsbaustein oder das FlexRay-IP-Modul verfügt über ein generisches, also allgemeines, CPU-Interface 203, an das sich über entsprechende teilnehmerspezifische Teilbausteine 204, also Customer CPU Interfaces CIF eine große Anzahl von unterschiedlichen kundenspezifischen Host CPUs 102 anschließen lassen. Dadurch muss abhängig vom Teilnehmer 102 nur der Teilbaustein 204 variiert werden, was einen deutlich geringeren Aufwand bedeutet. Das CPU-Interface 203 und der restliche Kommunikationsbaustein 100 kann unverändert übernommen werden.

Der Eingabepufferspeicher oder Eingangspufferspeicher 201 und der Ausgangspufferspeicher oder Ausgabepufferspeicher 202 können in einem gemeinsamen Speicherbaustein oder aber in getrennten Speicherbausteinen ausgebildet sein. Dabei dient der Eingabepufferspeicher 201 für die Zwischenspeicherung von Botschaften für die Übertragung zu einem Botschaftsspeicher 300. Dabei ist der Eingabepufferbaustein 201 vorzugsweise so ausgebildet, dass er zwei vollständige Botschaften bestehend aus jeweils einem Kopfsegment oder Headersegment, insbesondere mit Konfigurationsdaten und ein Datensegment oder Payload Segment speichern kann. Dabei ist der Eingabepufferspeicher 201 zweiteilig (Teilpufferspeicher und Schattenspeicher) ausgebildet, wodurch sich durch wechselweises Schreiben der beiden Teile des Eingabepufferspeichers bzw. durch Zugriffswechsel die Übertragung zwischen Teilnehmer-CPU 102 und Botschaftsspeicher 300 beschleunigen lässt. Ebenso dient der Ausgabepufferspeicher oder Ausgangspufferspeicher 202 (Output-Buffer OBF) für die Zwischenspeicherung von Botschaften für die Übertragung vom Botschaftsspeicher 300 zur Teilnehmer-CPU 102. Dabei ist auch der Ausgabepuffer 202 so gestaltet, dass zwei komplette Botschaften bestehend aus Kopfsegment, insbesondere mit Konfigurationsdaten und Datensegment, also Payload Segment, gespeichert werden können. Auch hier ist der Ausgabepufferspeicher 202 in zwei Teile, einen Teilpufferspeicher und einen Schattenspeicher aufgeteilt, wodurch sich auch hier durch wechselweises Lesen der beiden Teile die Übertragung bzw. durch Zugriffswechsel die Übertragung zwischen Teilnehmer- bzw. Host-CPU 102 und Botschaftsspeicher 300 beschleunigen lässt. Diese zweite Anordnung 104 bestehend aus den Blöcken 201 bis 204 ist mit der ersten Anordnung 105 wie dargestellt verbunden.

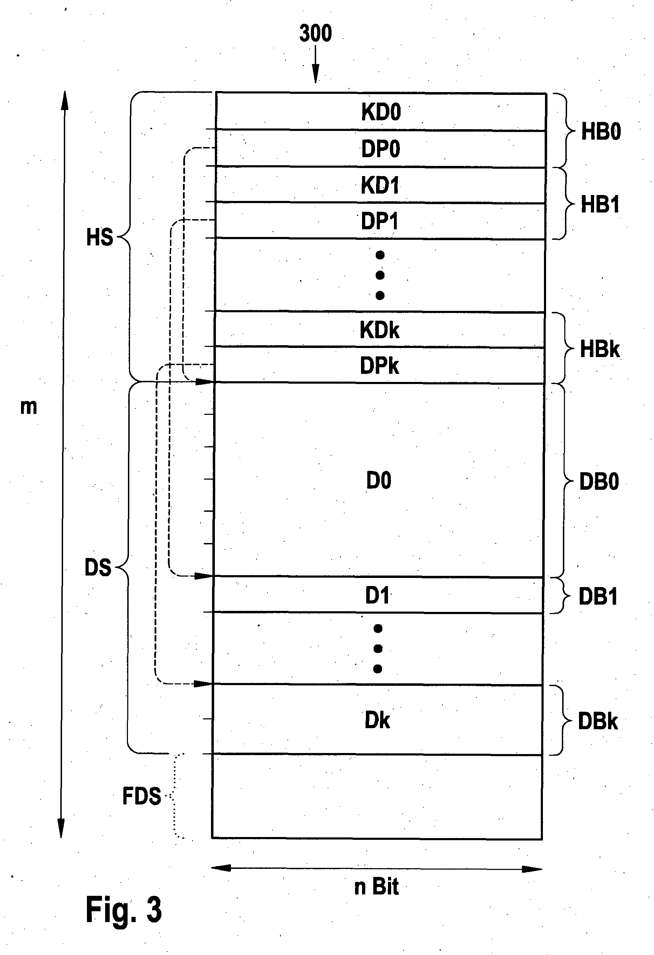

Die Anordnung 105 besteht aus einem Botschaftsverwalter 200 (Message Handler MHD) und einem Botschaftsspeicher 300 (Message RAM). Der Botschaftsverwalter 200 kontrolliert bzw. steuert den Datentransfer zwischen dem Eingabepufferspeicher 201 sowie Ausgabepufferspeicher 202 und dem Botschaftsspeicher 300. Gleichermaßen kontrolliert bzw. steuert er die Datenübertragung in der anderen Richtung über die dritte Anordnung 103. Der Botschaftsspeicher 300 ist vorzugsweise als single-ported RAM ausgeführt. Dieser RAM-Speicher speichert die Botschaften bzw. Botschaftsobjekte, also die eigentlichen Daten, zusammen mit Konfigurations- und Statusdaten. Die genaue Struktur des Botschaftsspeichers 300 ist in Figur 3 näher dargestellt.

Die dritte Anordnung 103 besteht aus den Blöcken 205 bis 208. Entsprechend den beiden Kanälen des FlexRay Physical Layer ist diese Anordnung 103 in zwei Datenpfade mit je zwei Datenrichtungen aufgeteilt. Dies wird durch die Verbindungen 213 und 214 deutlich, worin die beiden Datenrichtungen für den Kanal A mit RxA und TxA für Empfangen (RxA) und Senden (TxA) sowie für Kanal B mit RxB und TxB dargestellt sind. Mit Verbindung 215 ist ein optionaler bidirektionaler Steuereingang bezeichnet. Die Anbindung der dritten Anordnung 103 erfolgt über einen ersten Pufferspeicher 205 für Kanal B und einen zweiten Pufferspeicher 206 für Kanal A. Diese beiden Pufferspeicher (Transient Buffer RAMs: RAM A und RAM B) dienen als Zwischenspeicher für die Datenübertragung von bzw. zu der ersten Anordnung 105. Entsprechend der beiden Kanäle sind diese beiden Pufferspeicher 205 und 206 mit jeweils einem Schnittstellenbaustein 207 und 208 verbunden, die die FlexRay-Protokoll-Controller oder Busprotokoll-Controller bestehend aus einem Sende-/Empfangs-Schieberegister und der FlexRay Protokoll Finite State Maschine, enthalten. Die beiden Pufferspeicher 205 und 206 dienen somit als Zwischenspeicher für die Datenübertragung zwischen den Schieberegistern der Schnittstellenbausteine oder FlexRay Protokoll Controller 207 und 208 und dem Botschaftsspeicher 300. Auch hier werden vorteilhafter Weise durch jeden Pufferspeicher 205 oder 206 die Datenfelder, also das Payload Segment oder Datensegment zweier FlexRay-Botschaften gespeichert.

Weiterhin dargestellt im Kommunikationsbaustein 100 ist mit 209 die globale Zeiteinheit (Global Time Unit GTU), welche für die Darstellung der globalen Zeitraster im FlexRay, also den Mikrotick µT und den Makrotick MT, zuständig ist. Ebenso wird über die globale Zeiteinheit 209 die fehlertolerante Uhrensynchronisation der Zykluszähler (Cycle Counter) und die Kontrolle der zeitlichen Abläufe im statischen und dynamischen Segment des FlexRay geregelt. Mit Block 210 ist die allgemeine Systemsteuerung (System Universal Control SUC) dargestellt, durch welche die Operationsmodi des FlexRay-Kommunikationscontrollers 750 kontrolliert und gesteuert werden. Dazu gehören der Wakeup, der Startup, die Reintegration bzw. Integration, Normaloperation (normal operation) und passive Operation (passive operation).

Block 211 zeigt das Netzwerk und Fehlermanagement (Network- und Error Management NEM), wie in der FlexRay-Protokollspezifikation v2.0 oder v2.1 beschrieben. Block 212 schließlich zeigt die Unterbrechungssteuerung (Interrupt Control INT), welche die Status- und Fehlerunterbrechungsflaggen (status and error interrupt flags) verwaltet und die Unterbrechungsausgänge 219 zur Teilnehmer-CPU 102 kontrolliert bzw. steuert. Der Block 212 enthält außerdem einen absoluten und einen relativen Timer bzw. Zeitgeber zur Erzeugung der Zeitunterbrechungen oder Timerinterrupts.

Für die Kommunikation in einem FlexRay-Netzwerk können Botschaftsobjekte bzw. Botschaften (Message Buffer) mit bis zu 254 Datenbytes konfiguriert werden. Der Botschaftsspeicher 300 ist insbesondere ein Botschafts-RAM-Speicher (Message RAM), welcher z. B. bis zu 64 oder mehr (z.B. 128) Botschaftsobjekte speichern kann. Alle Funktionen, die die Behandlung bzw. Verwaltung der Botschaften selbst betreffen, sind dem Botschaftsverwalter oder Message Handler 200 implementiert. Dies sind z.B. die Akzeptanzfilterung, Transfer der Botschaften zwischen den beiden FlexRay-Protokoll-Controller-Blöcken 207 und 208 und dem Botschaftsspeicher 300, also dem Message RAM sowie die Kontrolle der Sendereihenfolge und das Bereitstellen von Konfigurationsdaten bzw. Statusdaten.

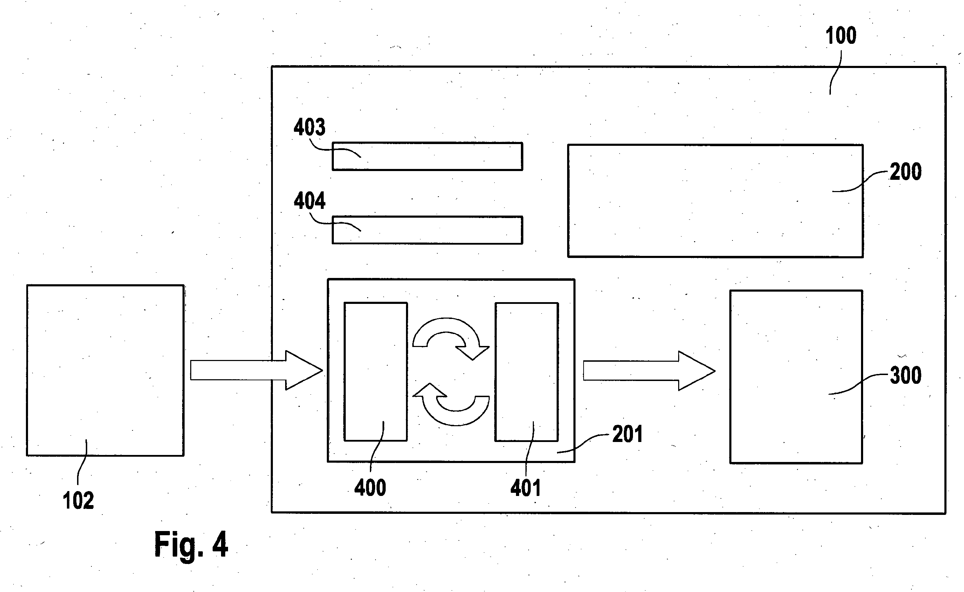

Eine externe CPU, also ein externer Prozessor der Teilnehmerprozessor 102, kann über die Teilnehmerschnittstelle 107 mit dem teilnehmerspezifischen Teil 204 direkt auf die Register des FlexRay-Kommunikationsbausteins 100 zugreifen. Dabei wird eine Vielzahl von Registern verwendet. Diese Register werden eingesetzt, um die FlexRay Protokoll Controller, also die Schnittstellenbausteine 207 und 208, den Botschaftsverwalter (Message Handler MHD) 200, die globale Zeiteinheit (Global Time Unit GTU) 209, den allgemeinen Systemcontroller (System Universal Controller SUC) 210, die Netzwerk- und Fehlermanagementeinheit (Network und Error Management Unit N EM) 211, den Unterbrechungscontroller (Interrupt Controller INT) 212 sowie den Zugriff auf das Message RAM, also den Botschaftsspeicher 300 zu konfigurieren und zu steuern und ebenso den entsprechenden Status anzuzeigen. Zumindest auf Teile dieser Register wird noch in den Figuren 4 bis 6 und 7 bis 9 näher eingegangen. Ein solch beschriebener FlexRay-Kommunikationsbaustein 100 ermöglicht die einfache Umsetzung der FlexRay-Spezifikation v2.0, wodurch einfach ein ASIC oder ein Mikrocontroller mit entsprechender FlexRay-Funktionalität generiert werden kann.

Durch den beschriebenen FlexRay-Kommunikationsbaustein 100 kann die FlexRay-Protokollspezifikation, insbesondere v2.0, vollständig unterstützt werden und es sind damit z.B. bis zu 64 oder mehr (z.B. 128) Botschaften bzw. Botschaftsobjekte konfigurierbar. Dabei ergibt sich ein flexibel konfigurierbarer Botschaftsspeicher für die Speicherung einer unterschiedlichen Anzahl von Botschaftsobjekten abhängig von der Größe des jeweiligen Datenfeldes bzw. Datenbereiches der Botschaft. Somit sind also vorteilhafterweise Botschaften- oder Botschaftsobjekte zu konfigurieren, die unterschiedlich lange Datenfelder besitzen. Der Botschaftsspeicher 300 ist dabei vorteilhafter Weise als FIFO (first infirst out) ausgebildet, so dass sich ein konfigurierbarer Empfangs-FIFO ergibt. Jede Botschaft bzw. jedes Botschaftsobjekt im Speicher kann als Empfangsspeicherobjekt (Receive-Buffer), Sendespeicherobjekt (Transmit-Buffer) oder als Teil des konfigurierbaren Empfangs-FIFOs konfiguriert werden. Ebenso ist eine Akzeptanzfilterung auf Frame-ID, Channel-ID und Cycle-Counter im FlexRay-Netzwerk möglich. Zweckmäßiger Weise wird somit das Netzwerkmanagement unterstützt. Vorteilhafterweise sind außerdem maskierbare Modulinterrupts vorgesehen.

In Figur 3 ist detailliert die Aufteilung des Botschaftsspeichers 300 beschrieben. Für die nach der FlexRay-Protokollspezifikation geforderte Funktionalität eines FlexRay-Kommunikationscontrollers 750 wird ein Botschaftsspeicher für das Bereitstellen von zu sendenden Botschaften (Transmit Buffer Tx) sowie das Abspeichern von fehlerfrei empfangenen Botschaften (Receive Buffer Rx) benötigt. Ein FlexRay-Protokoll erlaubt Botschaften mit einem Datenbereich, also einem Payload-Bereich von 0 bis 254 Bytes. Wie in Figur 2 dargestellt ist der Botschaftsspeicher 300 Teil des FlexRay-Kommunikationsbausteins 100. Das nachfolgend beschriebene Verfahren sowie der entsprechende Botschaftsspeicher 300 beschreiben die Speicherung von zu sendenden Botschaften sowie von empfangenen Botschaften, insbesondere unter Verwendung eines Random Access Memory (RAM), wobei es durch den beschriebenen Mechanismus möglich ist in einem Botschaftsspeicher vorgegebener Größe eine variable Anzahl von Botschaften zu speichern. Dabei ist die Anzahl der speicherbaren Botschaften abhängig von der Größe der Datenbereiche der einzelnen Botschaften, wodurch zum einen die Größe des benötigten Speichers minimiert werden kann ohne die Größe der Datenbereiche der Botschaften einzuschränken und zum anderen eine optimale Ausnutzung des Speichers erfolgt. Im Folgenden nun soll diese variable Aufteilung eines insbesondere RAM-basierten Botschaftsspeichers 300 für einen FlexRay Communication Controller näher beschrieben werden.

Zur Implementierung wird nun beispielhaft ein Botschaftsspeicher mit einer festgelegten Wortbreite von n Bit, beispielsweise 8, 16, 32 usw., sowie einer vorgegebenen Speichertiefe von m Worten vorgegeben (m, n als natürliche Zahlen). Dabei wird der Botschaftsspeicher 300 in zwei Segmente aufgeteilt, ein Header Segment oder Kopfsegment HS und ein Datensegment DS (Payload Section, Payload Segment). Pro Botschaft wird somit ein Headerbereich HB und ein Datenbereich DB angelegt. Für Botschaften 0, 1 bis k (k als natürliche Zahl) werden somit Headerbereiche oder Kopfbereiche HB0, HB1 bis HBk und Datenbereiche DB0, DB1 bis DBk angelegt. In einer Botschaft wird also zwischen ersten und zweiten Daten unterschieden, wobei die ersten Daten Konfigurationsdaten und/oder Statusdaten bezüglich der FlexRay Botschaft entsprechen und jeweils in einem Headerbereich HB (HB0, HB1, ..., HBk) abgelegt werden. Die zweiten Daten, die den eigentlichen Nutzdaten entsprechen, die übertragen werden sollen, werden entsprechend in Datenbereichen DB (DB0, DB1, ..., DBk) abgelegt. Somit entsteht für die ersten Daten pro Botschaft ein erster Datenumfang (in Bit, Byte oder Speicherworten gemessen) und für die zweiten Daten einer Botschaft ein zweiter Datenumfang (ebenfalls in Bit, Byte oder Speicherworten gemessen), wobei der zweite Datenumfang pro Botschaft unterschiedlich sein kann. Die Aufteilung zwischen Kopfsegment HS und Datensegment DS ist nun im Botschaftsspeicher 300 variabel, d. h. es existiert keine vorgegebene Grenze zwischen den Bereichen. Die Aufteilung zwischen Kopfsegment HS und Datensegment DS ist abhängig von der Anzahl k der Botschaften sowie dem zweiten Datenumfang, also dem Umfang der eigentlichen Nutzdaten, einer Botschaft bzw. aller k Botschaften zusammen. Den Konfigurationsdaten KD0, KD1 bis KDk der jeweiligen Botschaft wird nun ein Zeigerelement oder Datapointer DPO, DPI bis DPk jeweils direkt zugeordnet. In der speziellen Ausgestaltung wird jedem Kopfbereich HBO, HB1 bis HBk eine feste Anzahl von Speicherworten, hier zwei, zugeordnet, so dass immer ein Konfigurationsdatum KD (KD0, KD 1, ..., KDk) und ein Zeigerelement DP (DPO, DP1, ..., DPk) zusammen in einem Headerbereich HB abgelegt sind. An diesem Kopfsegment HS mit den Headerbereichen HB, dessen Größe bzw. erster Datenumfang abhängig von der Anzahl k der zu speichernden Botschaften ist, schließt das Datensegment DS zur Speicherung der eigentlichen Botschaftsdaten D0, D1 bis Dk an. Dieses Datensegment (oder Datensection) DS hängt in seinem Datenumfang vom jeweiligen Datenumfang der abgelegten Botschaftsdaten ab, hier z.B. in DB0 sechs Worte, DB1 ein Wort und DBk zwei Worte. Die jeweiligen Zeigerelemente DP0, DP1 bis DPk zeigen somit immer zum Beginn, also auf die Anfangsadresse des jeweiligen Datenbereichs DB0, DB1 bis DBk, in denen die Daten D0, D1 bis Dk der jeweiligen Botschaften 0, 1, bis k abgelegt sind. Damit ist die Aufteilung des Botschaftsspeichers 300 zwischen Kopfsegment HS und Datensegment DS variabel und hängt von der Anzahl k der Botschaften selbst sowie dem jeweiligen Datenumfang einer Botschaft und damit dem gesamten zweiten Datenumfang ab. Werden weniger Botschaften konfiguriert, wird das Kopfsegment HS kleiner und der frei werdende Bereich im Botschaftsspeicher 300 kann als Zusatz zum Datensegment DS für die Speicherung von Daten verwendet werden. Durch diese Variabilität kann eine optimale Speicherausnutzung gewährleistet werden, womit auch die Verwendung kleinerer Speicher möglich ist. Das freie Datensegment FDS ,insbesondere dessen Größe, ebenfalls abhängig von der Kombination aus Anzahl k der gespeicherten Botschaften und dem jeweiligen zweiten Datenumfang der Botschaften ist somit minimal und kann sogar 0 werden.

Neben der Verwendung von Zeigerelementen ist es auch möglich, die ersten und zweiten Daten, also die Konfigurationsdaten KD (KD0, KD1, ..., KDk) und die eigentlichen Daten D (D0, D1, ... , Dk) in einer vorgebbaren Reihenfolge abzulegen, so dass die Reihenfolge der Kopfbereiche HB0 bis HBk im Kopfsegment HS und die Reihenfolge der Datenbereiche DB0 bis DBk im Datensegment DS jeweils identisch ist. Dann könnte unter Umständen sogar auf ein Zeigerelement verzichtet werden.

In einer besonderen Ausgestaltung ist dem Botschaftsspeicher ein Fehlerkennungserzeuger, insbesondere ein Parity-Bit-Generator-Element und ein Fehlerkennungsprüfer, insbesondere ein Parity-Bit-Prüf-Element zugeordnet, um die Korrektheit der gespeicherten Daten in HS und DS zu gewährleisten, indem pro Speicherwort oder pro Bereich (HB und/oder DB) eine Prüfsumme eben insbesondere als Parity-Bit mit abgelegt werden kann. Andere Kontrollkennungen, z.B. ein CRC (Cyclic Redundancy Check) oder auch Kennungen höherer Mächtigkeit wie ECC (Error Code Correction) sind denkbar. Damit sind gegenüber einer festgelegten Aufteilung des Botschaftsspeichers folgende Vorteile gegeben:

Der Anwender kann bei der Programmierung entscheiden, ob er eine größere Anzahl von Botschaften mit kleinem Datenfeld oder ob er eine kleinere Anzahl von Botschaften mit großem Datenfeld verwenden möchte. Bei der Konfiguration von Botschaften mit unterschiedlich großem Datenbereich DB wird der vorhandene Speicherplatz optimal ausgenutzt. Der Anwender hat die Möglichkeit einen Datenspeicherbereich gemeinsam für unterschiedliche Botschaften zu nutzen.

Bei der Implementierung des Communication Controllers auf einer integrierten Schaltung kann die Größe des Botschaftsspeichers 300 durch Anpassung der Speichertiefe (Anzahl m der Worte) des verwendeten Speichers an die Bedürfnisse der Applikation angepasst werden, ohne die sonstigen Funktionen des Communication Controllers zu ändern.

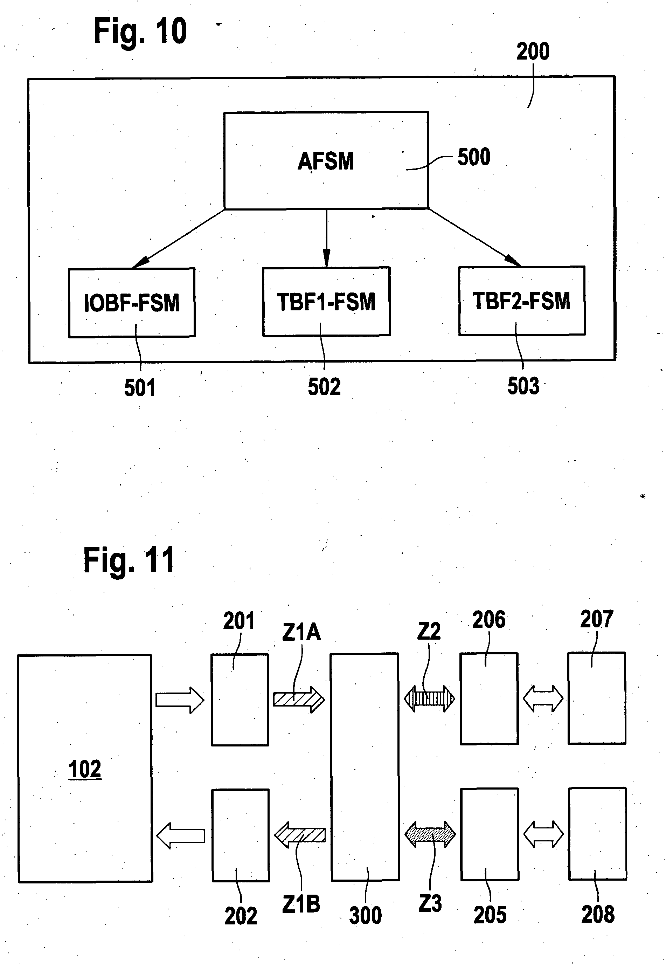

Im Weiteren wird nun anhand der Figuren 4 bis 6 sowie 7 bis 9 der Host-CPU-Zugriff, also Schreiben und Lesen von Konfigurationsdaten bzw. Statusdaten und der eigentlichen Daten über die Pufferspeicheranordnung 201 und 202, näher beschrieben. Dabei ist es das Ziel, eine Entkopplung bezüglich der Datenübertragung derart herzustellen, dass die Datenintegrität sichergestellt werden kann und gleichzeitig eine hohe Übertragungsgeschwindigkeit gewährleistet ist. Die Steuerung dieser Vorgänge erfolgt über den Botschaftsverwalter 200, was später noch näher in den Figuren 10, 11 und 12 beschrieben wird.

In den Figuren 4, 5 und 6 werden zunächst die Schreibzugriffe auf den Botschaftsspeicher 300 durch die Host-CPU der Teilnehmer-CPU 102 über den Eingangspufferspeicher 201 näher erläutert. Dazu zeigt Figur 4 noch einmal den Kommunikationsbaustein 100, wobei aus Gründen der Übersichtlichkeit nur die hier relevanten Teile des Kommunikationsbausteins 100 gezeigt sind. Dies ist zum einen der für die Steuerung der Abläufe verantwortliche Botschaftsverwalter 200 sowie zwei Kontrollregister 403 und 404, die wie dargestellt außerhalb des Botschaftsverwalters 200 im Kommunikationsbaustein 100 untergebracht sein können, aber auch im Botschaftsverwalter 200 selbst enthalten sein können. 403 stellt dabei das Eingangs-Anforderungsregister (Input Buffer Command Request Register) dar und 404 das Eingangs-Maskierungsregister (Input Buffer Command Mask Register). Schreibzugriffe der Host-CPU 102 auf den Botschaftsspeicher 300 (Message RAM) erfolgen also über einen zwischengeschalteten Eingangspufferspeicher 201 (Input Buffer). Dieser Eingangspufferspeicher 201 ist nun geteilt bzw. gedoppelt ausgelegt, und zwar als Teilpufferspeicher 400 und einem zu dem Teilpufferspeicher zugehörigen Schattenspeicher 401. Damit kann wie nachfolgend beschrieben ein kontinuierlicher Zugriff der Host-CPU 102 auf die Botschaften bzw. Botschaftsobjekte respektive Daten des Botschaftsspeichers 300 erfolgen und damit Datenintegrität und beschleunigte Übertragung gewährleistet werden.

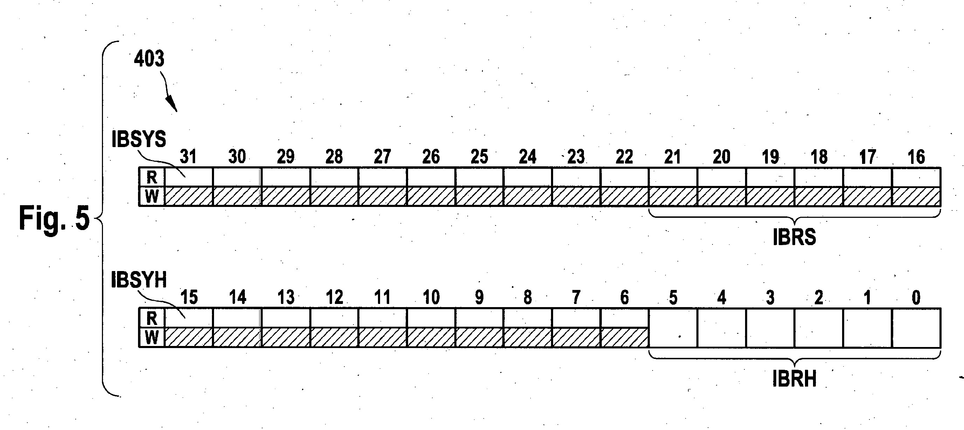

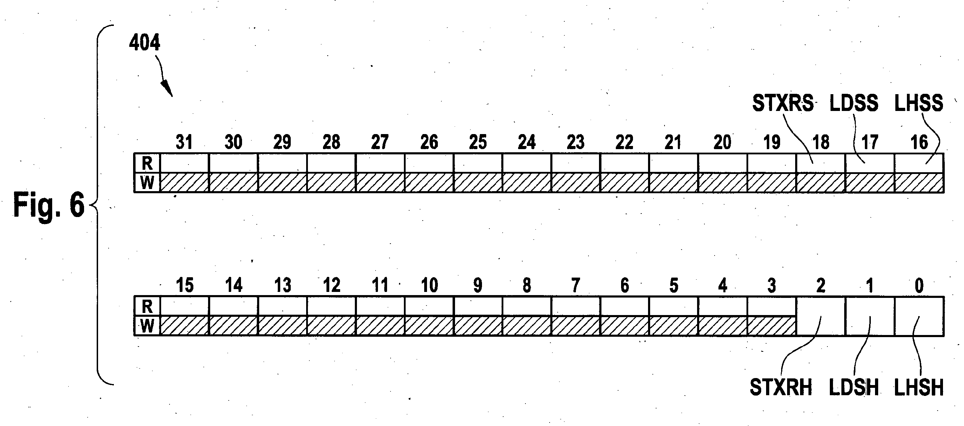

Die Steuerung der Zugriffe erfolgt über das Eingangs-Anforderungsregister 403 und über das Eingangs-Maskierungsregister 404. Im Register 403 sind in Figur 5 mit den Zahlen von 0 bis 31 die jeweiligen Bitstellen in 403 hier beispielhaft für eine Breite von 32 Bit dargestellt. Gleiches gilt für das Register 404 und die Bitstellen 0 bis 31 in dem Maskierungsregister 404 aus Figur 6.

Es erhalten nun beispielhaft die Bitstellen 0 bis 5, 15, 16 bis 21 und 31 des Registers 403 bezüglich der Ablaufsteuerung eine besondere Funktion. So ist in die Bitstellen 0 bis 5 des Registers 403 eine Kennung IBRH (Input Buffer Request Host) als Botschaftskennung eintragbar. Ebenso ist in die Bitstellen 16 bis 21 des Registers 403 eine Kennung IBRS (Input Buffer Request Shadow) eintragbar. Ebenso sind in Registerstelle 15 von 403 IBSYH und in Registerstelle 31 von 403 IBSYS als Zugriffskennungen eingetragen. Ausgezeichnet sind auch die Stellen 0 bis 2 des Registers 404, wobei in 0 und 1 mit LHSH (Load Header Section Host) und LDSH (Load Data Section Host) weitere Kennungen als Datenkennungen eingetragen sind. Diese Datenkennungen sind hier in einfachster Form, nämlich jeweils als ein Bit ausgebildet. In Bitstelle 2 von Register 404 ist mit STXRH (Set Transmission X Request Host) eine Startkennung eingeschrieben. Im Weiteren wird nun der Ablauf des Schreibzugriffs auf den Botschaftsspeicher 300 über den Eingangspuffer 201 beschrieben.

Die Host-CPU 102 schreibt die Daten der zu transferierenden Botschaft in den Eingangspufferspeicher 201. Dabei kann die Host-CPU 102 nur die Konfigurations- und Headerdaten KD einer Botschaft für das Headersegment HS des Botschaftsspeichers 300 oder nur die eigentlichen, zu übertragenden Daten D einer Botschaft für das Datensegment DS des Botschaftsspeichers 300 oder beide schreiben. Welcher Teil einer Botschaft, also Konfigurationsdaten und/oder die eigentlichen Daten, übertragen werden soll, wird durch die speziellen Datenkennungen LHSH und LDSH im Eingangs-Markierungsregister 404 festgelegt. Dabei wird durch LHSH (Load Header Section Host) festgelegt ob die Headerdaten, also die Konfigurationsdaten KD, übertragen werden und durch LDSH (Load Data Section Host) festgelegt, ob die Daten D übertragen werden sollen. Dadurch, dass der Eingangspufferspeicher 201 zweiteilig mit einem Teilpufferspeicher 400 und einem dazugehörigen Schattenspeicher 401 ausgebildet ist und ein wechselseitiger Zugriff erfolgen soll sind als Gegenstück zu LHSH und LDSH zwei weitere Datenkennungsbereiche vorgesehen, die nun auf den Schattenspeicher 401 bezogen sind. Diese Datenkennungen in den Bitstellen 16 und 17 des Registers 404 sind mit LHSS (Load Header Section Shadow) und LDSS (Load Data Section Shadow) bezeichnet. Durch diese wird somit der Übertragungsvorgang bezüglich des Schattenspeichers 401 gesteuert.

Ist nun das Startbit bzw. die Startkennung STXRH (Set Transmission X Request Host) in Bitstelle 2 des Eingangs-Maskierungsregisters 404 gesetzt, so wird nach erfolgtem Transfer der jeweils zu übertragenden Konfigurationsdaten und/oder eigentlichen Daten in den Botschaftsspeicher 300 automatisch eine Sendeanforderung (Transmission Request) für das entsprechende Botschaftsobjekt gesetzt. D. h. durch diese Startkennung STXRH wird das automatische Senden eines übertragenden Botschaftsobjekts gesteuert, insbesondere gestartet.

Das Gegenstück hierzu entsprechend für den Schattenspeicher 401 ist die Startkennung STXRS (Set Transmission X Request Shadow) welches beispielhaft in Bitstelle 18 des Eingangs-Markierungsregisters 404 enthalten ist und auch hier im einfachsten Fall eben als ein Bit ausgebildet ist. Die Funktion von STXRS ist analog der Funktion von STXRH, lediglich bezogen auf den Schattenspeicher 401.

Wenn die Host-CPU 102 die Botschaftskennung, insbesondere die Nummer des Botschaftsobjekts im Botschaftsspeicher 300, in welches die Daten des Eingangspufferspeichers 201 transferiert werden sollen, in die Bitstellen 0 bis 5 des Eingangsanforderungsregisters 403, also nach IBRH, schreibt, werden der Teilpufferspeicher 400 des Eingangspufferspeichers 201 und der zugehörige Schattenspeicher 401 vertauscht bzw. es wird der jeweilige Zugriff von Host-CPU 102 und Botschaftsspeicher 300 auf die beiden Teilspeicher 400 und 401 vertauscht, wie durch die halbkreisförmigen Pfeile angedeutet. Dabei wird z.B. auch der Datentransfer, also die Datenübertragung zum Botschaftsspeicher 300 gestartet. Die Datenübertragung zum Botschaftsspeicher 300 selbst erfolgt aus dem Schattenspeicher 401. Gleichzeitig werden die Registerbereiche IBRH und IBRS getauscht. Ebenso getauscht werden LHSH und LDSH gegen LHSS und LDSS. Gleichermaßen getauscht wird STXRH mit STXRS. IBRS zeigt somit die Kennung der Botschaft, also die Nummer des Botschaftsobjektes für das eine Übertragung, also ein Transfer aus dem Schattenspeicher 401 im Gange ist bzw. welches Botschaftsobjekt, also welcher Bereich im Botschaftsspeicher 300 als letztes Daten (KD und/oder D) aus dem Schattenspeicher 401 erhalten hat. Durch die Kennung (hier wieder beispielsweise 1 Bit) IBSYS (Input Buffer Busy Shadow) in Bitstelle 31 des Eingangs-Anforderungsregisters 403 wird angezeigt ob gerade eine Übertragung mit Beteiligung des Schattenspeichers 401 erfolgt. So wird beispielsweise bei IBSYS=1 gerade aus dem Schattenspeicher 401 übertragen und bei IBSYS=0 eben nicht. Dieses Bit IBSYS wird beispielsweise durch das Schreiben von IBRH, also Bitstellen 0 bis 5, in Register 403 gesetzt, um anzuzeigen, dass ein Transfer zwischen dem Schattenspeicher 401 und dem Botschaftsspeicher 300 im Gange ist. Nach Beendigung dieser Datenübertragung zum Botschaftsspeicher 300 wird IBSYS wieder zurückgesetzt.

Während der Datentransfer aus dem Schattenspeicher 401 gerade läuft kann die Host-CPU 102 die nächste zu transferierende Botschaft in den Eingangspufferspeicher 201 bzw. in den Teilpufferspeicher 400 schreiben. Mit Hilfe einer weiteren Zugriffskennung IBSYH (Input Buffer Busy Host) beispielsweise in Bitstelle 15 von Register 403 kann die Kennung noch weiter verfeinert werden. Schreibt die Host-CPU 102 gerade IBRH, also die Bitstellen 0 bis 5 von Register 403, während eine Übertragung zwischen dem Schattenspeicher 401 und dem Botschaftsspeicher 300 läuft, also IBSYS=1 ist, so wird IBSYH im Eingangsanforderungsregister 403 gesetzt. Sobald der laufende, Transfer, also die laufende Übertragung, abgeschlossen ist, wird der angeforderte Transfer (Anforderung durch STXRH siehe oben) gestartet und das Bit IBSYH zurückgesetzt. Das Bit IBSYS bleibt während der ganzen Zeit gesetzt, um anzuzeigen, dass Daten zum Botschaftsspeicher 300 transferiert werden. Alle verwendeten Bits aller Ausführungsbeispiele können dabei auch als Kennungen mit mehr als einem Bit ausgebildet sein. Vorteilhaft ist die Ein-Bit Lösung aus speicher- und verarbeitungsökonomischen Gründen.

Der so beschriebene Mechanismus erlaubt es der Host-CPU 102 kontinuierlich Daten in die im Botschaftsspeicher 300 befindlichen Botschaftsobjekte bestehend aus Headerbereich HB und Datenbereich DB zu transferieren, vorausgesetzt die Zugriffsgeschwindigkeit der Host-CPU 102 auf den Eingangspufferspeicher 201 ist kleiner oder gleich der internen Datentransferrate des FlexRay-IP-Moduls, also des Kommunikationsbausteins 100.

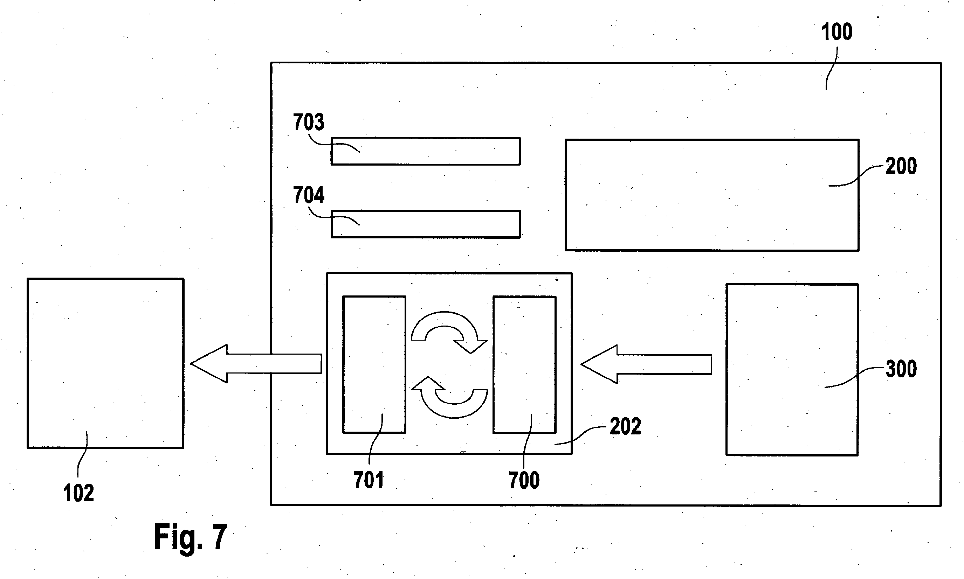

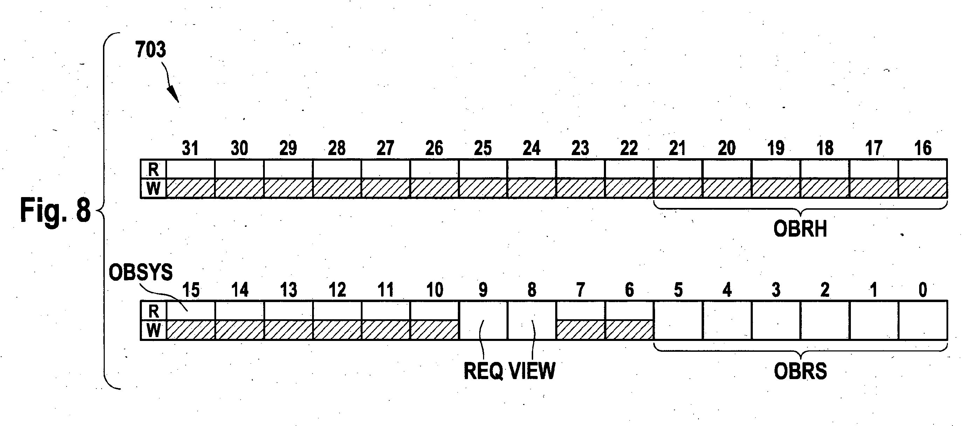

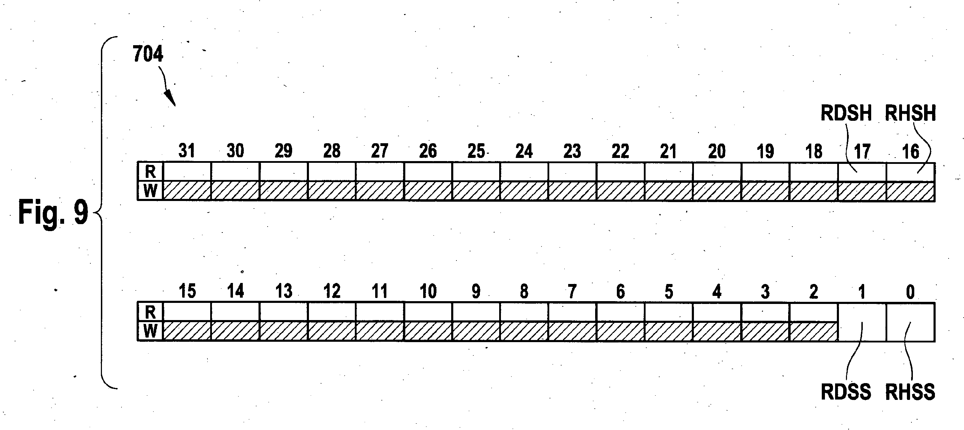

In den Figuren 7, 8 und 9 werden nun die Lesezugriffe auf den Botschaftsspeicher 300 durch die Host-CPU oder Teilnehmer-CPU 102 über den Ausgangspufferspeicher oder Ausgabepufferspeicher 202 näher erläutert. Dazu zeigt Figur 7 noch einmal den Kommunikationsbaustein 100, wobei aus Gründen der Übersichtlichkeit auch hier nur die relevanten Teile des Kommunikationsbausteins 100 gezeigt sind. Dies ist zum einen der für die Steuerung der Abläufe verantwortliche Botschaftsverwalter 200 sowie zwei Kontrollregister 703 und 704, die wie dargestellt außerhalb des Botschaftsverwalter 200 im Kommunikationsbaustein 100 untergebracht sein können, aber auch im Botschaftsverwalter 200 selbst enthalten sein können. 703 stellt dabei das Ausgangs-Anforderungsregister (Output Buffer Command Request Register) dar und 704 das Ausgangs-Maskierungsregister (Output Buffer Command Mask Register). Lesezugriffe der Host-CPU 102 auf den Botschaftsspeicher 300 erfolgen also über den zwischengeschalteten Ausgangspufferspeicher 202 (Output Buffer). Dieser Ausgangspufferspeicher 202 ist nun ebenfalls geteilt bzw. gedoppelt ausgelegt, und zwar als Teilpufferspeicher 701 und einem zu dem Teilpufferspeicher zugehörigen Schattenspeicher 700. Damit kann auch hier wie nachfolgend beschrieben ein kontinuierlicher Zugriff der Host-CPU 102 auf die Botschaften bzw. Botschaftsobjekte respektive Daten des Botschaftsspeichers 300 erfolgen und damit Datenintegrität und beschleunigte Übertragung nun in der Gegenrichtung vom Botschaftsspeicher 300 zum Host 102 gewährleistet wer- - den. Die Steuerung der Zugriffe erfolgt über das Ausgangs-Anforderungsregister 703 und über das Ausgangs-Maskierungsregister 704. Auch im Register 703 sind mit den Zahlen von 0 bis 31 die jeweiligen Bitstellen in 703 hier beispielhaft für eine Breite von 32 Bit dargestellt (vgl. Figur 8). Gleiches gilt für das Register 704 und die Bitstellen 0 bis 31 in 704 (vgl. Figur 9).

Es erhälten nun beispielhaft die Bitstellen 0 bis 5, 8 und 9, 15 und 16 bis 21 des Registers 703 bezüglich der Ablaufsteuerung des Lesezugriffs eine besondere Funktion. So ist in die Bitstellen 0 bis 5 des Registers 703 eine Kennung OBRS (Output Buffer Request Shadow) als Botschaftskennung eintragbar. Ebenso ist in die Bitstellen 16 bis 21 des Registers 703 eine Kennung OBRH (Output Buffer Request Host) eintragbar. Als Zugriffskennung ist in Bitstelle 15 von Register 703 eine Kennung OBSYS (Output Buffer Busy Shadow) eintragbar. Ausgezeichnet sind auch die Stellen 0 und 1 des Ausgabe-Maskierungsregisters 704, wobei in den Bitstellen 0 und 1 mit RDSS (Read Data Section Shadow) und RHSS (Read Header Section Shadow) weitere Kennungen als Datenkennungen eingetragen sind. Weitere Datenkennungen sind beispielsweise in den Bitstellen 16 und 17 mit RDSH (Read Data Section Host) und RHSH (Read Header Section Host) vorgesehen. Diese Datenkennungen sind auch hier beispielhaft in einfachster Form, nämlich jeweils als ein Bit ausgebildet. In Bitstelle 9 des Registers 703 ist eine Startkennung REQ eingetragen. Weiterhin ist eine Umschaltkennung VIEW vorgesehen die beispielhaft in Bitstelle 8 von Register 703 eingetragen ist.
Die Host-CPU 102 fordert die Daten eines Botschaftsobjekts aus dem Botschaftsspeicher 300 an, indem sie die Kennung der gewünschten Botschaft, also insbesondere die Nummer des gewünschten Botschaftsobjektes, nach OBRS also in die Bitstellen 0 bis 5 des Registers 703 schreibt. Auch hierbei kann die Host-CPU 102 wie in der Gegenrichtung entweder nur die Status- bzw. Konfigurations- und Headerdaten KD einer Botschaft also aus einem Headerbereich oder nur die eigentlich zu übertragenden Daten D einer Botschaft also aus dem Datenbereiche oder auch beide lesen. Welcher Teil der Daten also aus Headerbereich und/oder Datenbereich übertragen werden soll wird hierbei vergleichbar mit der Gegenrichtung durch RHSS und RDSS festgelegt. Das heißt RHSS gibt an, ob die Headerdaten gelesen werden sollen und RDSS gibt an, ob die eigentlichen Daten gelesen werden sollen.

Eine Startkennung dient dazu die Übertragung vom Botschaftsspeicher 300 zum Schättenspeicher 700 zu starten. D.h. wird als Kennung wie im einfachsten Fall ein Bit verwendet, wird durch Setzen von Bit REQ in Bitstelle 9 im Ausgabe-Anforderungsregister 703 die Übertragung vom Botschaftsspeicher 300 zum Schattenspeicher 700 gestartet. Die laufende Übertragung wird wieder durch eine Zugriffskennung, hier wieder im einfachsten Fall durch ein Bit OBSYS im Register 703, angezeigt. Um Kollisionen zu vermeiden ist es vorteilhaft, wenn das Bit REQ nur dann gesetzt werden kann, wenn OBSYS nicht gesetzt ist, also gerade keine laufende Übertragung erfolgt. Hier erfolgt dann auch der Botschaftstransfer zwischen dem Botschaftsspeicher 300 und dem Schattenspeicher 700. Der eigentliche Ablauf könnte nun einerseits vergleichbar zur Gegenrichtung wie unter den Figuren 4, 5 und 6 beschrieben gesteuert werden (komplementäre Registerbelegung) und erfolgen oder aber in einer Variation durch eine zusätzliche Kennung, nämlich eine Umschaltkennung VIEW in Bitstelle 8 des Registers 703. D.h. nach Abschluss der Übertragung wird das Bit OBSYS zurückgesetzt und durch Setzen des Bits VIEW im Ausgabe-Anforderungsregister 703 werden der Teilpufferspeicher 701 und der zugehörige Schattenspeicher 700 getauscht bzw. es werden die Zugriffe darauf getauscht und die Host-CPU 102 kann nun das vom Botschaftsspeicher 300 angeforderte Botschaftsobjekt, also die entsprechende Botschaft, aus dem Teilpufferspeicher 701 auslesen. Dabei werden auch hier vergleichbar mit der Gegenübertragungsrichtung in den Figuren 4 bist 6 die Registerzellen OBRS und OBRH getauscht. Gleichermaßen werden RHSS und RDSS gegen RHSH und RDSH getauscht. Als Schutzmechanismus kann auch hier vorgesehen werden, dass das Bit VIEW. nur dann gesetzt werden kann, wenn OBSYS nicht gesetzt ist, also keine laufende Übertragung stattfindet.

Somit erfolgen Lesezugriffe der Host-CPU 102 auf den Botschaftsspeicher 300 über den zwischengeschalteten Ausgangspufferspeicher 202. Dieser Ausgangspufferspeicher 202 ist ebenso wie der Eingangspufferspeicher 201 doppelt bzw. zweiteilig ausgelegt, um einen kontinuierlichen Zugriff der Host-CPU 102 auf die Botschaftsobjekte, die im Botschaftsspeicher 300 abgelegt sind, zu gewährleisten. Auch hier werden die Vorteile der hohen Datenintegrität und der beschleunigten Übertragung erzielt.

Durch die Verwendung der beschriebenen Eingangs- und Ausgangspuffer 201, 202 wird sichergestellt, dass eine Host-CPU 102 trotz der modulinternen Latenzzeiten unterbrechungsfrei auf den Botschaftsspeicher 300 zugreifen kann.

Zur Sicherstellung dieser Datenintegrität wird die Datenübertragung, insbesondere die Weiterleitung im Kommunikationsbaustein 100, durch den Botschaftsverwalter 200 (Message Handler MHD) vorgenommen. Dazu ist in Figur 10 der Botschaftsverwalter 200 dargestellt. Der Botschaftsverwalter 200 ist in seiner Funktionalität durch mehrere Zustandsmaschinen oder Zustandsautomaten, also endliche Automaten, so genannte Finite-State-Machinen (FSM) darstellbar. Dabei sind wenigstens drei Zustandsmaschinen und in einer besonderen Ausführungsform vier Finite-State-Machinen vorgesehen. Eine erste Finite-State-Machine ist die IOBF-FSM und mit 501 bezeichnet (Input/Output Buffer State Machine). Diese IOBF-FSM könnte auch je Übertragungsrichtung bezüglich des Eingangspufferspeichers 201 oder des Ausgangspufferspeichers 202 in zwei Finite-State-Machinen aufgeteilt sein IBF-FSM (Input Buffer FSM) und OBF-FSM (Output Buffer FSM), womit maximal fünf Zustandsautomaten (IBF-FSM, OBF-FSM, TBF1-FSM, TBF2-FSM, AFSM) denkbar wären. Bevorzugt ist aber eine gemeinsame IOBF-FSM vorzusehen. Eine zweite Finite-State-Machine ist hier im Zuge des bevorzugten Ausführungsbeispiels in zwei Blöcke 502 und 503 aufgeteilt und bedient die beiden Kanäle A und B bezüglich der Speicher 205 und 206, wie zu Fig. 2 beschrieben. Dabei kann eine Finite-State-Machine vorgesehen sein, um beide Kanäle A und B zu bedienen, oder aber wie in der bevorzugten Form eine Finite-State-Machine TBF1-FSM mit 502 bezeichnet (Transient Buffer 1 (206, RAM A) State Machine) für Kanal A und für Kanal B eine TBF2-FSM mit 503 bezeichnet (Transient Buffer 2 (205, RAM B) State Machine).

Zur Steuerung des Zugriffs der drei Finite-State-Machinen 501-503 im bevorzugten Ausführungsbeispiel dient eine Arbiter-Finite-State-Machine, die so genannte AFSM, die mit 500 bezeichnet ist. Die Daten (KD und/oder D) werden in einem durch ein Taktmittel, wie z.B. ein VCO (Voltage Controlled Oszillator), einen Schwingquarz usw., generierten oder aus diesem angepassten Takt im Kommunikationsbaustein 100 übertragen. Der Takt T kann dabei im Baustein generiert werden oder von außen, z.B. als Bustakt, vorgegeben sein. Diese Arbiter-Finite-State-Machine AFSM 500 gibt abwechselnd einer der drei Finite-State-Machinen 501-503, insbesondere jeweils für eine Taktperiode T Zugriff auf den Botschaftsspeicher 300. D.h. die zur Verfügung stehende Zeit wird entsprechend den Zugriffsanforderungen der einzelnen Zustandsautomaten 501, 502, 503 auf diese anfordernden Zustandsautomaten aufgeteilt. Erfolgt eine Zugriffsanforderung von nur einer Finite-State-Machine, so erhält diese 100% der Zugriffszeit, also alle Takte T. Erfolgt eine Zügriffsanforderung von zwei Zustandsautomaten, erhält jede Finite-State-Machine 50% der Zugriffszeit. Erfolgt schließlich eine Zugriffsanforderung von drei Zustandsautomaten so erhält jede der Finite-State-Machinen 1/3 der Zugriffszeit. Dadurch wird die jeweils zur Verfügung stehende Bandbreite optimal genutzt.

Die erste Finite-State-Machine 501, also IOBF-FSM, führt bei Bedarf folgende Aktionen aus:
- Datentransfer vom Eingangspufferspeicher 201 zum ausgewählten Botschaftsobjekt im Botschaftsspeicher 300.
- Datentransfer vom ausgewählten Botschaftsobjekt im Botschaftsspeicher 300 zum Ausgangspufferspeicher 202.

Die Zustandsmaschine 502 für Kanal A, also TBF1-FSM, führt folgende Aktionen aus:
- Datentransfer vom ausgewählten Botschaftsobjekt im Botschaftsspeicher 300 zum Pufferspeicher 206 von Kanal A.
- Datentransfer vom Pufferspeicher 206 zum ausgewählten Botschaftsobjekt im Botschaftsspeicher 300.
- Suche nach dem passenden Botschaftsobjekt im Botschaftsspeicher 300, wobei bei Empfang das Bötschaftsobjekt (Receive Buffer) zum Abspeichern einer auf Kanal A empfangenen Botschaft im Rahmen einer Akzeptanzfilterung gesucht wird und beim Senden das nächste auf Kanal A zu sendende Botschaftsobjekt (Transmit Buffer).

Analog dazu ist die Aktion von TBF2-FSM, also der Finite-State-Machine für Kanal B in Block 503. Diese führt den Datentransfer vom ausgewählten Botschaftsobjekt im Botschaftsspeicher 300 zum Pufferspeicher 205 von Kanal B aus und den Datentransfer vom Pufferspeicher 205 zum ausgewählten Botschaftsobjekt im Botschaftsspeicher 300. Auch die Suchfunktion ist analog zu TBF1-FSM nach einem passenden Botschaftsobjekt im Botschaftsspeicher 300, wobei bei Empfang das Botschaftsobjekt (Receive Buffer) zum Abspeichern einer auf Kanal B empfangenen Botschaft im Rahmen einer Akzeptanzfilterung gesucht wird und beim Senden die nächste auf Kanal B zu sendende Botschaft oder Botschaftsobjekt (Transmit Buffer).

In Figur 11 sind nun noch einmal die Abläufe und die Übertragungswege dargestellt. Die drei Zustandsmaschinen 501-503 steuern die jeweiligen Datenübertragungen zwischen den einzelnen Teilen. Dabei ist mit 102 wieder die Host-CPU dargestellt, mit 201 der Eingangspufferspeicher und mit 202 der Ausgangspufferspeicher. Mit 300 ist der Botschaftsspeicher dargestellt und die beiden Pufferspeicher für Kanal A und Kanal B mit 206 und 205. Die Schnittstellenelemente 207 und 208 sind ebenfalls dargestellt. Der erste Zustandsautomat IOBF-FSM, mit 501 bezeichnet steuert den Datentransfer Z1A und Z1B, also vom Eingangspufferspeicher 201 zum Botschaftsspeicher 300 und vom Botschaftsspeicher 300 zum Ausgangspufferspeicher 202. Die Datenübertragung erfolgt dabei über Datenbusse mit einer Wortbreite von beispielsweise 32 Bit wobei auch jede andere Bitzahl möglich ist. Gleiches gilt für die Übertragung Z2 zwischen dem Botschaftsspeicher und dem Pufferspeicher 206. Diese Datenübertragung wird durch TBFI-FSM, also die Zustandsmaschine 502 für Kanal A, gesteuert. Die Übertragung Z3 zwischen Botschaftsspeicher 300 und Pufferspeicher 205 wird durch den Zustandsautomaten TBF2-FSM, also 503 gesteuert. Auch hier erfolgt der Datentransfer Ober Datenbusse mit einer beispielhaften Wordbreite von 32 Bit, wobei auch hier jede andere Bitzahl möglich ist. Normalerweise benötigt der Transfer eines kompletten Botschaftsobjektes über die genannten Übertragungswege mehrere Taktperioden T. Daher erfolgt eine Aufteilung der Übertragungszeit bezogen auf die Taktperioden T durch den Arbiter, also die AFSM 500. In Figur 11 sind also die Datenpfade zwischen denen vom Message Handler 200 kontrollierten Speicherkomponenten dargestellt. Um die Datenintegrität der im Botschaftsspeicher 300 gespeicherten Botschaftsobjekte sicherzustellen, sollten vorteilhafterweise zur gleichen Zeit nur auf einem der dargestellten Pfade also Z1A und Z1B sowie Z2 und Z3 gleichzeitig Daten ausgetauscht werden.

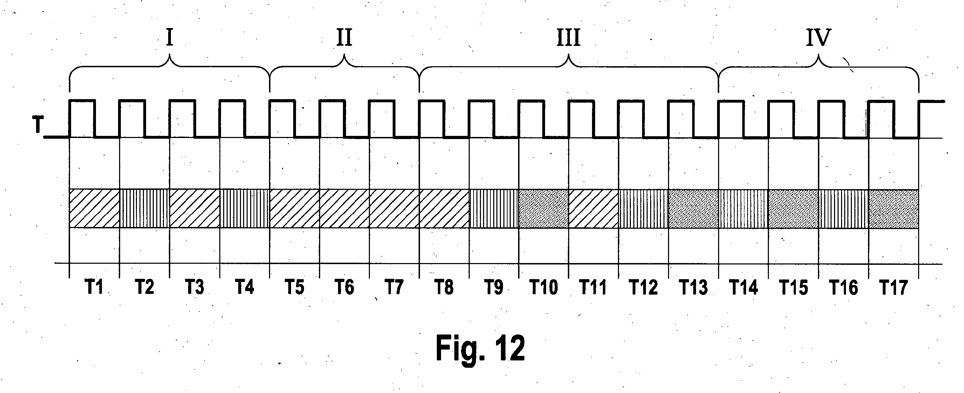

In Figur 12 ist an einem Beispiel gezeigt, wie die zur Verfügung stehenden Systemtakte T vom Arbiter, also der AFSM 500, auf die drei anfordernden Zustandsautomaten aufgeteilt werden. In Phase 1 (I) erfolgen Zugriffsanforderungen von Zustandsautomat 501 und Zustandsautomat 502, d.h., dass die gesamte Zeit jeweils zur Hälfte auf die beiden anfordernden Zustandautomaten aufgeteilt wird. Bezogen auf die Taktperioden in Phase 1 (I) bedeutet dies, dass Zustandsautomat 501 in den Taktperioden T1 und T3 Zugriff erhält und Zustandsautomat 502 in den Taktperioden T2 und T4. In Phase 2 (II) erfolgt der Zugriff nur durch die Zustandsmaschine 501, sodass alle drei Taktperioden, also 100% der Zugriffszeit von T5 bis T7 auf IOBF-FSM entfällt. In Phase 3 (III) erfolgen Zugriffsanforderungen aller drei Zustandsautomaten 501 bis 503, sodass eine Drittelung der Gesamtzugriffszeit erfolgt. Der Arbiter AFSM 500 verteilt dann die Zugriffszeit beispielsweise so, dass in den Taktperioden T8 und T11 die Finit-State-Machine 501, in den Taktperioden T9 und T12 die Finite-State-Machine 502 und in den Taktperioden T10 und T13 die Finite-State-Machine 503 Zugriff erhält. In Phase 4 (IV) schließlich erfolgt der Zugriff durch zwei Zustandsautomaten, 502 und 503 auf den beiden Kanälen A und B des Kommunikationsbausteins 100, sodass eine Zugriffsverteilung der Taktperioden T14 und T16 an Finite-State-Machine 502 und in T15 und T17 an Finite-State-Machine 503 erfolgt.

Der Arbiterzustandsautomat AFSM 500 sorgt also 1dafür, dass falls mehr als eine der drei Zustandsmaschinen 501-503 eine Anforderung für einen Zugriff auf den Botschaftsspeicher 300 stellt, der Zugriff taktweise und abwechselnd auf die anfordernden Zustandsmaschinen 501-503 aufgeteilt wird. Diese Vörgehensweise stellt die Integrität der im Botschaftsspeicher 300 abgelegten Botschaftsobjekte, also die Datenintegrität, sicher. Will zum Beispiel die Host-CPU 102 über den Ausgangspufferspeicher 202 ein Botschaftsobjekt auslesen während gerade eine empfangene Botschaft in dieses Botschaftsobjekt geschrieben wird, so wird abhängig davon welche Anforderung zuerst gestartet wurde entweder der alte Stand oder der neue Stand ausgelesen, ohne dass die Zugriffe im Botschaftsobjekt im Botschaftsspeicher 300 selbst kollidieren.

Das beschriebene Verfahren ermöglicht der Host-CPU 102 im laufenden Betrieb jedes beliebige Botschaftsobjekt im Botschaftsspeicher 300 zu lesen oder zu schreiben, ohne dass das ausgewählte Botschaftsobjekt für die Dauer des Zugriffs der Host-CPU 102 von der Teilnahme am Datenaustausch auf beiden Kanälen des FlexRay Busses 101 gesperrt wäre (Buffer Locking). Gleichzeitig wird durch die taktweise Verschachtelung der Zugriffe die Integrität der im Botschaftsspeicher 300 abgelegten Daten sichergestellt und die Übertragungsgeschwindigkeit, auch durch Ausnutzung der vollen Bandbreite erhöht.

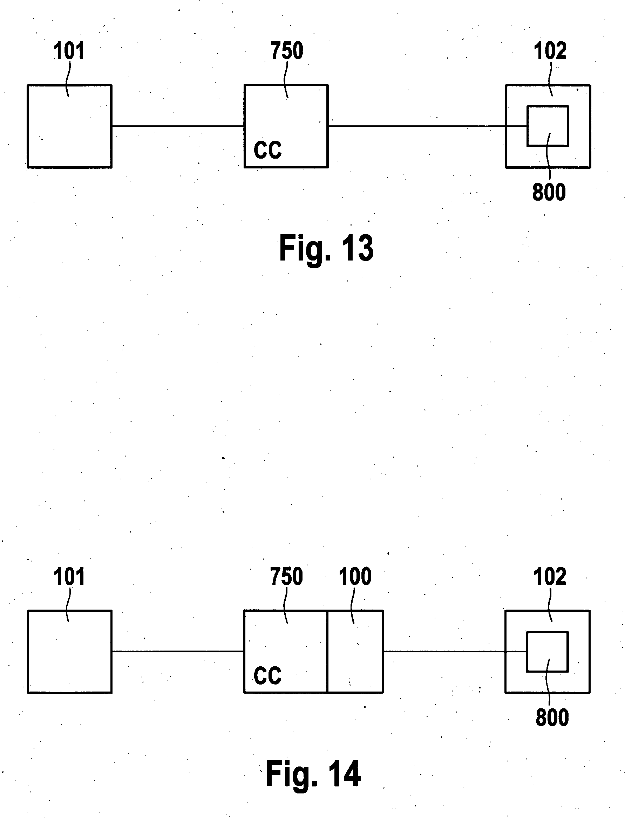

In den Figuren 13 und 14 sind verschiedene Möglichkeiten zur Realisierung einer solchen Verbindung dargestellt. Bei der Verbindung gemäß Figur 13 ist der Mikrocontroller 800 unmittelbar an den FlexRay-Kommunikationscontroller 750 angeschlossen. Der Anschluss erfolgt über eine serielle Schnittstelle, vorzugsweise eine Universal Synchronous/ Asynchronous Receiver/ Transmitter (USART) Schnittstelle. Bei der Verbindung gemäß Figur 14 ist der Mikrocontroller 800 mittelbar über einen FlexRay-Kommunikationsbaustein 100, wie er weiter oben unter Bezugnahme auf die Figuren 1 bis 12 beschrieben ist, an den FlexRay-Kommunikationscontroller 750 angeschlossen. Der Kommunikationsbaustein 100 kann Bestandteil des Kommunikationscontrollers 750 oder als ein separates Bauteil ausgebildet sein.

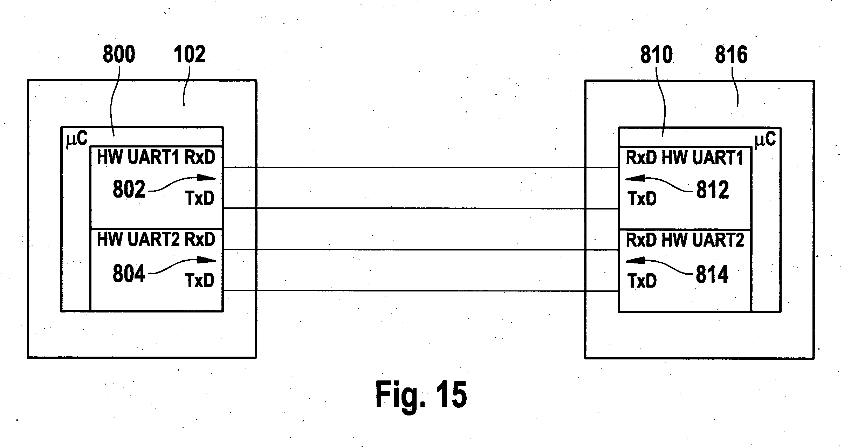

Anhand der Figur 15.ist gezeigt, dass der Mikrocontroller 800 des FlexRay-Teilnehmers 102 nicht nur an den FlexRay-Kommunikationscontroller 750, sondern über weitere serielle Schnittstellen zur Realisierung verschiedener anderer Funktionalitäten an einen oder mehrere weitere Mikrocontroller 810 angeschlossen sein kann. Diese weiteren Funktionalitäten sind bspw. eine LIN (Local Interconnect Network)-Funktionalität oder eine Wegfahrsperrenfunktionalität. Bei dem Ausführungsbeispiel aus Figur 15 weist der Mikrocontroller 800 zwei serielle Schnittstellen UART1 802 und UART2 804 auf, über die er mit zwei seriellen Schnittstellen UART1 812 und UART2 814 verbunden ist. Der weitere Mikrocontroller 810 ist bspw. Teil eines Kraftfahrzeug-Steuergeräts 816, welches für die Steuerung und/oder Regelung der Funktionalität eines LIN-Busses und einer Wegfahrsperre zuständig ist.

In Figur 15 ist deutlich zu erkennen, dass die zwei einzigen seriellen Schnittstellen 802, 804 des Mikrocontrollers 800 für die Realisierung der beiden Funktionalitäten Wegfahrsperre und LIN-Bus benötigt werden. Somit steht bei dem Mikro-controller 800 - ohne eine Einschränkung der Funktionalität des Teilnehmers 102 - keine serielle Schnittstelle für eine Anbindung des Teilnehmers 102 an den FlexRäy-Kommunikationscontroller 750 mehr zur Verfügung. Diese Einschränkung der Funktionalität kann mit der vorliegenden Erfindung behoben werden.

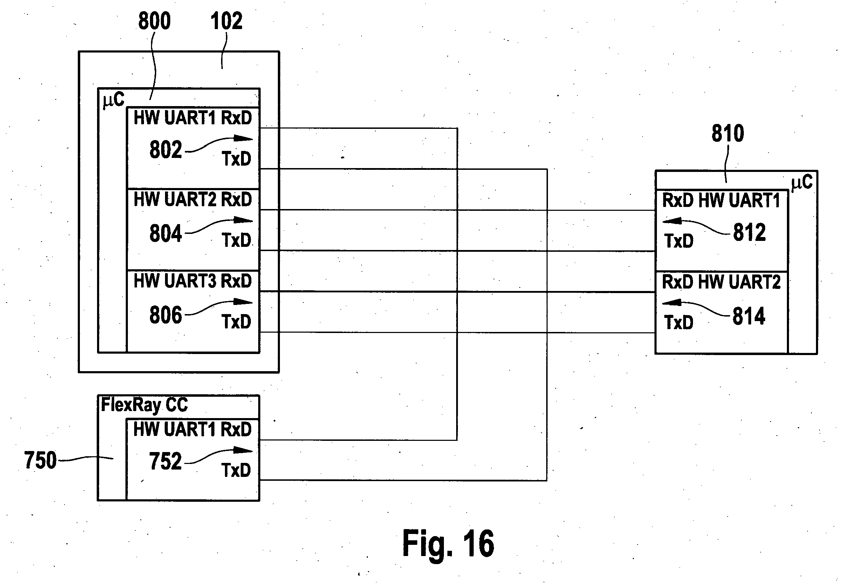

In Figur 16 ist eine Konfiguration für eine Verbindung zwischen den zwei Mikrocontrollern 800, 810 und einer FlexRay-Kommunikationssteuereinrichtung 750 gemäß einer ersten Ausführungsform dargestellt. Demnach ist in dem Mikrocontroller 800 eine zusätzliche serielle Software-Schnittstelle 806 emuliert worden. Zu diesem Zweck können Port Pins, vorzugsweise Port Expansion Pins, genutzt werden, die in dem Mikrocontroller 800 in der Regel sowieso schon vorhanden sind. Auf diese Weise kann die Emulation der zusätzlichen seriellen Schnittstelle 806 mit minimalem Aufwand realisiert werden. Da mit den Port Pins keine sehr hohen Datenraten erzielt werden können, ist es vorteilhaft, die emulierte serielle Schnittstelle 806 für diejenige Funktionalität einzusetzen, die eine geringere Datenrate erfordert als die andere Funktionalität.

Gemäß der Ausführungsform aus Figur 16 ist der Mikrocontroller 800 über die erste serielle Hardware-Schnittstelle 802 an dem FlexRay-Communication Controller 750 angeschlossen. Der Controller 750 verfügt zu diesem Zweck ebenfalls über eine serielle Schnittstelle 752. Diese Art des Anschlusses entspricht der in Figur 13 dargestellten Anschlussart. Selbstverständlich ist es jedoch denkbar, zwischen den Mikrocontroller 800 und den Kommunikationscontroller 750 einen FlexRay-Kommunikationsbaustein 100 anzuordnen (vgl. Figur 14). Über die zweite serielle Hardware-Schnittstelle 804 ist der Mikrocontroller 800 zur Realisierung derjenigen Funktionalität, welche eine höhere Datenrate erfordert als die andere Funktionalität, bspw. der LIN-Bus-Funktionalität, an die erste serielle Schnittstelle 812 des anderen Mikrocontrollers 810 angeschlossen. Über eine weitere serielle Schnittstelle, z.B. die dritte serielle Schnittstelle, nämlich die emulierte Software-Schnittstelle 806, ist der Mikrocontroller 800 zur Realisierung derjenigen Funktionalität, welche eine geringere Datenrate erfordert als die andere Funktionalität, bspw. der Wegfahrsperren-Funktionalität, an die zweite serielle Schnittstelle 814 des anderen Mikrocontrollers 810 angeschlossen.

Selbstverständlich ist es möglich, die vorhandenen Port Pins des Mikrocontrollers 800 durch geeignete Hardware derart zu ergänzen, dass über die emulierte Software-Schnittstelle 806 auch höhere Datenraten erzielt werden können. Geeignete Hardware umfasst bspw. Schieberegister zum Zwischerispeichern von über die Schnittstelle 806 zu übertragenden Daten.

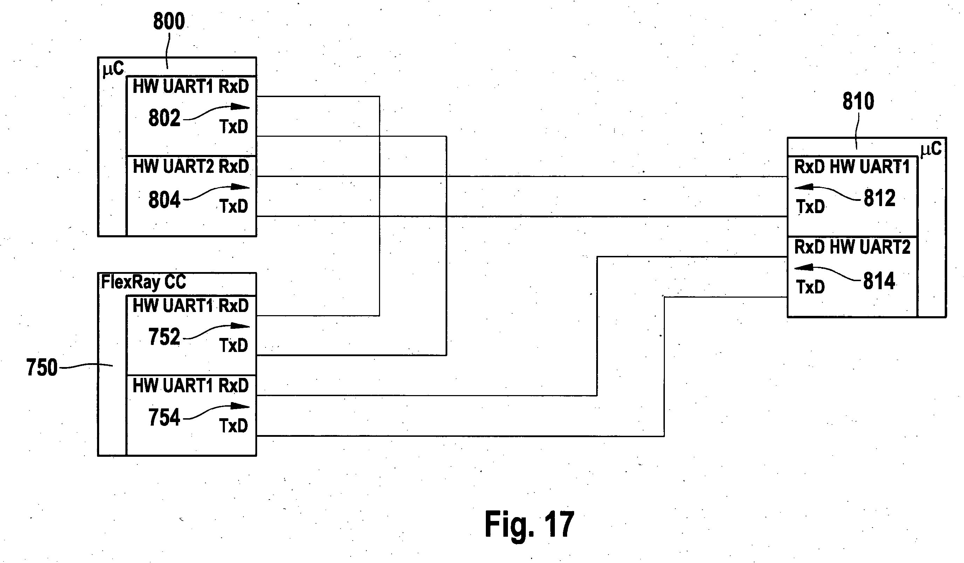

In Figur 17 ist eine andere Konfiguration für eine Verbindung zwischen den zwei Mikrocontrollern 800, 810 und der FlexRay-Kommunikationssteuereinrichtung 750 gemäß einer zweiten Ausführungsform dargestellt. Dabei bleibt der Mikrocontroller 800 unverändert und wird stattdessen in dem Kommunikationscontroller 750 eine zusätzliche serielle Hardware-Schnittstelle UART2 754 ausgebildet. Auch die zusätzliche serielle Schnittstelle 754 kann mittels im FlexRay-Kommunikationscontroller 750 bereits vorhandener Port Expansion Pins realisiert werden, wie dies weiter oben bereits beschrieben ist. Die Port Expansion Pins könne wahlweise mit Schieberegistern und/oder anderer Hardware erweitert werden, um eine höhere Datenrate über die Schnittstelle 754 zu erzielen. Mit dieser Ausgestaltung können herkömmliche Mikro-controller 800 für FlexRay-Teilnehmer 102 eingesetzt werden, wobei neben der FlexRay-Funktionalität auch die beiden anderen Funktionalitäten (z.B. LIN-Bus und Wegfahrsperre) zur Verfügung stehen.

Eine Besonderheit dieser Ausführungsform besteht darin, dass über die erste Verbindung zwischen der ersten seriellen Schnittstelle 802 des Mikrocontrollers 800 und der ersten seriellen Schnittstelle 752 des Kommunikationscontrollers 750 sowohl die FlexRay-Funktionalität als auch eine der beiden anderen Funktionalitäten, bspw. die Wegfahrsperrenfunktionalität, realisiert werden. Die Flex-Ray-Funktionalität wird durch geeignete Mittel in dem Controller 750 empfangen und weiterverarbeitet, bspw. aufbereitet und in Richtung Kommunikationsverbindung 101 weitergeleitet. Die über die erste Verbindung eingehende Funktionalität wird einfach durch den Kommunikationscontroller 750 hindurchgeschleift und über eine zweite serielle Schnittstelle 754 des Controllers 750 über eine weitere Verbindung an die zweite serielle Schnittstelle 814 des anderen Mikrocontrollers 810 geführt.

Die andere Funktionalität, bspw. die LIN-Bus-Funktionalität, wird von der ersten seriellen Schnittstelle des Mikrocontrollers 800 direkt an die erste Schnittstelle 812 des anderen Mikrocontrollers 810 geführt. Das bedeutet also, dass bei dieser Ausführungsform eine erste Verbindung zur Realisierung einer ersten Funktionalität direkt von einer seriellen Schnittstelle 804 an eine serielle Schnittstelle 812 des anderen Mikrocontrollers 810 geführt ist. Eine zweite Verbindung zur Realisierung einer zweiten Funktionalität ist mittelbar über den FlexRay-Kommunikationscontroller 750 von einer seriellen Schnittstelle 804 des Mikrocontrollers 800, über eine erste serielle Schnittstelle 752 in den Controller 750 rein und über eine zweite serielle Schnittstelle 754 aus dem Controller 750 wieder heraus, weiter zu einer seriellen Schnittstelle 814 des anderen Mikrocontrollers 810 geführt ist.

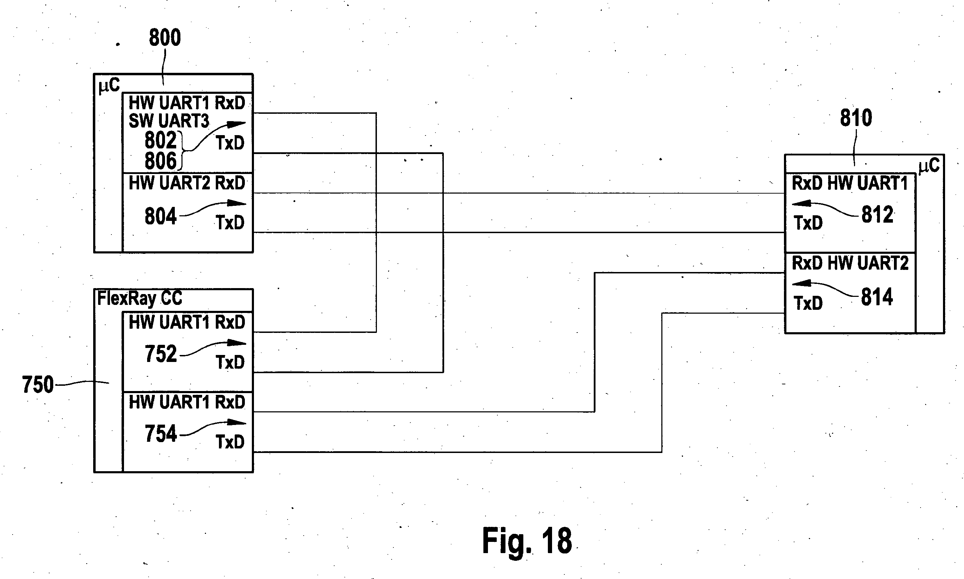

In Figur 18 ist eine andere Konfiguration für eine Verbindung zwischen den zwei Mikrocontrollern 800, 810 und der FlexRay-Kommunikationssteuereinrichtung 750 gemäß einer dritten Ausführungsform dargestellt. Diese Ausführungsform hat Ähnlichkeit mit der aus Figur 17, wobei in Figur 18 neben der zusätzlichen seriellen Schnittstelle 754 in dem Kommunikationscontroller 750 auch eine zusätzliche serielle Software-Schnittstelle 806 in dem Mikrocontroller 800 emuliert wurde. Für die serielle Schnittstelle 806 wurde die Hardware der bereits vorhandenen Schnittstelle 802 im Mikrocontroller 800 genutzt. Die Verbindungen zur Realisierung der verschiedenen Funktionalitäten stimmen mit denen der Ausführungsform aus Figur 17 überein.

## Patentansprüche

1. Verfahren zur Anbindung eines FlexRay-Teilnehmers (102) mit einem Mikrocontroller (800), der mindestens eine serielle Schnittstelle (802, 804) aufweist, an eine FlexRay-Kommunikationsverbindung (101) über eine FlexRay-Kommunikationssteuereinrichtung (750), die mindestens eine serielle Hardware-Schnittstelle (752) aufweist, wobei die Verbindung zwischen dem Teilnehmer (102) und der Kommunikationssteuereinrichtung (750) über serielle Schnittstellen (802, 752) erfolgt, **dadurch gekennzeichnet, dass** in dem FlexRay-Teilnehmer (102) mindestens eine zusätzliche serielle Schnittstelle (806) emuliert wird und der Mikrocontroller (800) über mindestens eine seiner seriellen Schnittstellen (802, 804, 806) an einen weiteren Mikrocontroller (810) und über mindestens eine andere seiner seriellen Schnittstellen (802, 804, 806) an die Kommunikationssteuereinrichtung (750) angeschlossen wird oder dass in der FlexRay-Kommunikationssteuereinrichtung (750) mindestens eine zusätzliche serielle Schnittstelle (754) ausgebildet wird und der Mikrocontroller (800) über mindestens eine der seriellen Schnittstellen (802, 804) an einen weiteren Mikrocontroller (810) und über mindestens eine andere der seriellen Schnittstellen (802, 804) an die Kommunikationssteuereinrichtung (750) angeschlossen wird.

2. Verfahren nach Anspruch 1, **dadurch gekennzeichnet, dass** in der FlexRay-Kommunikationssteuereinrichtung (750) mindestens eine zusätzliche serielle Schnittstelle (754) ausgebildet wird und die Kommunikationssteuereinrichtung (750) über mindestens eine der seriellen Schnittstellen (752, 754) an einen weiteren Mikrocontroller (810) angeschlossen wird.

3. Verfahren nach Anspruch 1 oder 2, **dadurch gekennzeichnet, dass** die in der FlexRay-Kommunikationssteuereinrichtung (750) ausgebildete mindestens eine serielle Schnittstelle (754) auf den von der Kommunikationssteuereinrichtung (750) sowieso bereitgestellten Port Expansion Pins emuliert wird.

4. Verfahren nach Anspruch 3, **dadurch gekennzeichnet, dass** den von der Kommunikationssteuereinrichtung (750) sowieso bereitgestellten Port Expansion Pins mindestens ein Schieberegister zugeordnet wird, in dem die über die Schnittstelle (754) zu übertragenden Daten für eine serielle Datenübertragung zwischengespeichert werden.

5. Verfahren nach einem der Ansprüche 1 bis 4, **dadurch gekennzeichnet, dass** bei mindestens einer in dem Teilnehmer (102) emulierten seriellen Schnittstelle (806) eine erste Verbindung zwischen einer der seriellen Schnittstellen (804) des Teilnehmers (102) und einer ersten Funktionalität direkt ausgebildet wird, optional eine zweite Verbindung zwischen einer anderen der seriellen Schnittstellen (806) des Teilnehmers (102) und einer zweiten Funktionalität direkt ausgebildet wird und eine weitere Verbindung zwischen noch einer anderen der seriellen Schnittstellen (802) und einer FlexRay-Funktionalität der FlexRay-Kommunikationssteuereinrichtung (750) direkt ausgebildet wird.

6. Verfahren nach Anspruch 5, **dadurch gekennzeichnet, dass** diejenige Verbindung zu der ersten oder zweiten Funktionalität über eine der in dem Teilnehmer (102) emulierten seriellen Software-Schnittstellen (806) ausgebildet wird, die die geringere Datenrate benötigt.

7. Verfahren nach einem der Ansprüche 2 bis 4, **dadurch gekennzeichnet, dass** bei mindestens einer in der FlexRay-Kommunikationssteuereinrichtung (750) ausgebildeten zusätzlichen seriellen Schnittstelle (754) eine erste Verbindung zwischen einer der seriellen Schnittstellen (804) des Teilnehmers (102) und einer ersten Funktionalität direkt ausgebildet wird und dass eine zweite Verbindung zwischen einer anderen der seriellen Schnittstellen (802) des Teilnehmers (102) und einer zweiten Funktionalität durch die FlexRay-Kommunikationssteuereinrichtung (750) geschleift wird.

8. Verfahren nach Anspruch 7, **dadurch gekennzeichnet, dass** die FlexRay-Funktionalität über einen Teil der zweiten Verbindung zwischen dem Teilnehmer (102) und der Kommunikationssteuereinrichtung (750) zusammen mit der zweiten Funktionalität übertragen wird.

9. FlexRay-Kommunikationssystem umfassend eine FlexRay-Kommunikationsverbindung (101) mit daran über FlexRay-Kommunikationssteuereinrichtungen (750) angeschlossenen FlexRay-Teilnehmern (102), wobei mindestens einer der Teilnehmer (102) einen Mikrocontroller (800) aufweist, der mindestens eine serielle Schnittstelle (802, 804) umfasst, und die Verbindung zwischen dem mindestens einen Teilnehmer (102) und der Kommunikationssteuereinrichtung (750) über serielle Schnittstellen (802, 752) erfolgt, **dadurch gekennzeichnet, dass** der mindestens eine Teilnehmer (102) über eine seiner seriellen Schnittstellen (804) unmittelbar mit einer ersten Funktionalität, über eine andere, zusätzlich emulierte serielle Schnittstelle (806) unmittelbar mit einer zweiten Funktionalität und über noch eine andere seiner seriellen Schnittstellen (802) unmittelbar mit der FlexRay-Funktionalität der ihm zugeordneten FlexRay-Kommunikationssteuereinrichtung (750) in Verbindung steht oder dass der mindestens eine Teilnehmer (102) über eine seiner seriellen Schnittstellen (804) unmittelbar mit einer ersten Funktionalität und über eine andere seiner seriellen Schnittstellen (802) mittelbar über die ihm zugeordnete FlexRay-Kommunikationssteuereinrichtung (750) mit einer zweiten Funktionalität in Verbindung steht.

10. FlexRay-Kommunikationssystem nach Anspruch 9, **dadurch gekennzeichnet, dass** das FlexRay-Kommunikationssystem einen FlexRay-Kommunikationsbaustein (100) zur Kopplung der FlexRay-Kommunikationsverbindung (101) mit dem mindestens einen FlexRay-Teilnehmer (102) aufweist, wobei der Kommunikationsbaustein (100) eine Anordnung (105) zur Zwischenspeicherung von Botschaften und eine Zustandsmaschine (500-503) aufweist, welche die Übertragung von Botschaften zwischen der Kommunikationsverbindung (101) und dem Teilnehmer (102) derart steuert, dass die Zustandsmaschine (500-503) vorgebbare Sequenzen betreffend Informationen zur Speicherung und Übertragung der Botschaften vorgibt oder abruft.

## Claims

1. Method for connecting a FlexRay subscriber (102) having a microcontroller (800), which has at least one serial interface (802, 804), to a FlexRay communication link (101) via a FlexRay communication control device (750) that has at least one serial hardware interface (752), wherein the link between the subscriber (102) and the communication control device (750) is made via serial interfaces (802, 752), **characterized in that** in the FlexRay subscriber (102) at least one additional serial interface (806) is emulated and the microcontroller (800) is connected via at least one of its serial interfaces (802, 804, 806) to a further microcontroller (810) and via at least one other of its serial interfaces (802, 804, 806) to the communication control device (750) or **in that** in the FlexRay communication control device (750) at least one additional serial interface (754) is produced and the microcontroller (800) is connected via at least one of the serial interfaces (802, 804) to a further microcontroller (810) and via at least one other of the serial interfaces (802, 804) to the communication control device (750).

2. Method according to Claim 1, **characterized in that** in the FlexRay communication control device (750) at least one additional serial interface (754) is produced and the communication control device (750) is connected via at least one of the serial interfaces (752, 754) to a further microcontroller (810).

3. Method according to Claim 1 or 2, **characterized in that** the at least one serial interface (754) produced in the FlexRay communication control device (750) is emulated on the port expansion pins that are provided by the communication control device (750) anyway.

4. Method according to Claim 3, **characterized in that** the port expansion pins provided by the communication control device (750) anyway are assigned at least one shift register in which the data to be transmitted via the interface (754) are buffer-stored for serial data transmission.

5. Method according to one of Claims 1 to 4, **characterized in that** in the case of at least one serial interface (806) emulated in the subscriber (102) a first link between one of the serial interfaces (804) of the subscriber (102) and a first functionality is produced directly, optionally a second link between another of the serial interfaces (806) of the subscriber (102) and a second functionality is produced directly and a further link between yet another of the serial interfaces (802) and a FlexRay functionality of the FlexRay communication control device (750) is produced directly.

6. Method according to Claim 5, **characterized in that** that link to the first or second functionality that requires the lower data rate is produced via one of the serial software interfaces (806) emulated in the subscriber (102).

7. Method according to one of Claims 2 to 4, **characterized in that** in the case of at least one additional serial interface (754) produced in the FlexRay communication control device (750) a first link between one of the serial interfaces (804) of the subscriber (102) and a first functionality is produced directly and **in that** a second link between another of the serial interfaces (802) of the subscriber (102) and a second functionality is looped through the FlexRay communication control device (750).

8. Method according to Claim 7, **characterized in that** the FlexRay functionality is transmitted via a portion of the second link between the subscriber (102) and the communication control device (750) together with the second functionality.

9. FlexRay communication system comprising a FlexRay communication link (101) with FlexRay subscribers (102) connected thereto via FlexRay communication control devices (750), wherein at least one of the subscribers (102) has a microcontroller (800) that comprises at least one serial interface (802, 804), and the link between the at least one subscriber (102) and the communication control device (750) is made via serial interfaces (802, 752), **characterized in that** the at least one subscriber (102) is connected via one of its serial interfaces (804) directly to a first functionality, via another, additionally emulated serial interface (806) directly to a second functionality and via yet another of its serial interfaces (802) directly to the FlexRay functionality of its associated FlexRay communication control device (750) or **in that** the at least one subscriber (102) is connected via one of its serial interfaces (804) directly to a first functionality and via another of its serial interfaces (802) indirectly via its associated FlexRay communication control device (750) to a second functionality.

10. FlexRay communication system according to Claim 9, **characterized in that** the FlexRay communication system has a FlexRay communication chip (100) for coupling the FlexRay communication link (101) to the at least one FlexRay subscriber (102), wherein the communication chip (100) has an arrangement (105) for buffer-storing messages and a state machine (500-503) that controls the transmission of messages between the communication link (101) and the subscriber (102) such that the state machine (500-503) prescribes or retrieves prescribable sequences relating to information for the storage and transmission of the messages.

## Revendications

1. Procédé de raccordement d'un terminal FlexRay (102) doté d'un microcontrôleur (800) qui présente au moins une interface série (802, 804) à une liaison de communication FlexRay (101) par l'intermédiaire d'un dispositif FlexRay (750) de commande de communication qui présente au moins une interface série électronique (752), la liaison entre le terminal (102) et le dispositif (750) de commande de communication s'effectuant par des interfaces série (802, 752), **caractérisé en ce que**
au moins une interface série supplémentaire (806) est émulée dans le terminal FlexRay (102) et le microcontrôleur (800) est raccordé par au moins l'une de ses interfaces série (802, 804, 806) à un autre microcontrôleur (810) et par l'intermédiaire d'au moins une autre de ses interfaces série (802, 804, 806) au dispositif (750) de commande de communication ou
**en ce qu'**au moins une interface série supplémentaire (754) est formée dans le dispositif FlexRay (750) de commande de communication et le microcontrôleur (800) est raccordé par l'intermédiaire d'au moins l'une des interfaces série (802, 804) à un autre microcontrôleur (810) et par l'intermédiaire d'au moins une autre des interfaces série (802, 804) au dispositif (750) de commande de communication.

2. Procédé selon la revendication 1, **caractérisé en ce qu'**au moins une interface série supplémentaire (754) est formée dans le dispositif (750) de commande de communication et **en ce que** le dispositif (750) de commande de communication est raccordé par l'intermédiaire d'au moins l'une des interfaces série (752, 754) à un autre microcontrôleur (810).

3. Procédé selon les revendications 1 ou 2, **caractérisé en ce que** la ou les interfaces série (754) formées dans le dispositif FlexRay (750) de commande de communication sont émulées sur les "Port Expansion Pins" de toute manière réalisé dans le dispositif (750) de commande de communication.

4. Procédé selon la revendication 3, **caractérisé en ce qu'**au moins un registre glissant dans lequel les données à transmettre par l'intermédiaire de l'interface (754) sont conservées temporairement en vue d'un transfert de données série est associé aux "Port Expansion Pins" réalisés de toute manière par le dispositif (750) de commande de communication.

5. Procédé selon l'une des revendications 1 à 4, **caractérisé en ce qu'**une première liaison entre l'une des interfaces série (804) du terminal (102) et une première fonctionnalité est formée directement dans au moins l'une des interfaces série (806) émulées dans le terminal (102), **en ce qu'**une deuxième liaison entre une autre des interfaces série (806) du terminal (102) et une deuxième fonctionnalité est facultativement formée directement et **en ce qu'**une autre liaison entre encore une autre des interfaces série (802) et une fonctionnalité FlexRay du dispositif FlexRay (750) de commande de communication est formée directement.

6. Procédé selon la revendication 5, **caractérisé en ce que** la liaison avec la première ou la deuxième fonctionnalité est formée par l'intermédiaire de celle des interfaces série logicielles (806) émulées dans le terminal (102) qui nécessite le plus petit débit de données.

7. Procédé selon l'une des revendications 2 à 4, **caractérisé en ce qu'**une première liaison entre l'une des interfaces série (804) du terminal (102) et une première fonctionnalité est formée directement dans au moins une interface série supplémentaire (754) formée dans le dispositif FlexRay (750) de commande de communication et **en ce qu'**une deuxième liaison entre une autre des interfaces série (802) du terminal (102) et une deuxième fonctionnalité est assurée par le dispositif FlexRay (750) de commande de communication.

8. Procédé selon la revendication 7, **caractérisé en ce que** la fonctionnalité FlexRay est transférée entre le terminal (102) et le dispositif (750) de commande de communication en même temps que la deuxième fonctionnalité par une partie de la deuxième liaison.

9. Système de communication FlexRay comprenant une liaison de communication FlexRay (101) à laquelle des terminaux FlexRay (102) sont raccordés par des dispositifs FlexRay (750) de commande de communication, au moins l'un des terminaux (102) présentant un microcontrôleur (800) qui comporte au moins une interface série (802, 804), la liaison entre le ou les terminaux (102) et le dispositif (750) de commande de communication s'effectuant par l'intermédiaire d'interfaces série (802, 752),
**caractérisé en ce que**
le ou les terminaux (102) communiquent directement avec une première fonctionnalité par l'intermédiaire de l'une de leurs interfaces série (804), communiquent directement avec une deuxième fonctionnalité par l'intermédiaire d'une autre interface série (806) émulée en supplément et communiquent directement avec la fonctionnalité FlexRay du dispositif FlexRay (750) de commande de communication qui leur est associé par l'intermédiaire d'encore une autre de leurs interfaces série (802) ou
**en ce que** le ou les terminaux (102) communiquent directement avec une première fonctionnalité par l'intermédiaire d'une de leurs interfaces série (804) et indirectement par l'intermédiaire d'une autre de leurs interfaces série (802) avec une deuxième fonctionnalité par l'intermédiaire du dispositif FlexRay (750) de commande de communication qui leur est associé.

10. Système de communication FlexRay selon la revendication 9, **caractérisé en ce que** le système de communication FlexRay présente
un module de communication FlexRay (100) permettant le raccordement de la liaison de communication FlexRay (101) avec le ou les terminaux FlexRay (102), le module de communication (100) présentant un ensemble (105) permettant de conserver temporairement des messages, et
une machine d'état (500-503) qui commande le transfert de messages entre la liaison de communication (101) et le terminal (102) de telle sorte que la machine d'état (500-503) définit ou demande des séquences prédéterminées concernant les informations de mise en mémoire et de transfert des messages.
